(19) Europäisches Patentamt
European Patent Office
Office européen des brevets

(11) **EP 3 698 517 B1**

(12) **EUROPÄISCHE PATENTSCHRIFT**

(45) Veröffentlichungstag und Bekanntmachung des Hinweises auf die Patenterteilung:
**04.05.2022 Patentblatt 2022/18**

(21) Anmeldenummer: **18783372.8**

(22) Anmeldetag: **20.09.2018**

(51) Internationale Patentklassifikation (IPC):
**H04L 9/32** (2006.01)    **G06F 21/64** (2013.01)

(52) Gemeinsame Patentklassifikation (CPC):
**G06F 21/64; H04L 9/3239; H04L 9/3247;**
H04L 2209/38

(86) Internationale Anmeldenummer:
**PCT/EP2018/075507**

(87) Internationale Veröffentlichungsnummer:
**WO 2019/076574 (25.04.2019 Gazette 2019/17)**

(54) **BIDIREKTIONALE VERKETTETE BLOCKCHAIN-STRUKTUR**

BIDIRECTIONALLY LINKED BLOCKCHAIN STRUCTURE

STRUCTURE DE CHAÎNE DE BLOCS À CONCATÉNATION BIDIRECTIONNELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2017 DE 102017218736**

(43) Veröffentlichungstag der Anmeldung:
**26.08.2020 Patentblatt 2020/35**

(73) Patentinhaber:
• **Bundesdruckerei GmbH**
**10969 Berlin (DE)**
• **Technische Universität Berlin**
**10623 Berlin (DE)**

(72) Erfinder:
• **KOMAROV, Ilya**
**13507 Berlin (DE)**
• **PAESCHKE, Manfred**
**16348 Wandlitz (DE)**
• **JANACIK, Peter**
**12203 Berlin (DE)**

(74) Vertreter: **Richardt Patentanwälte PartG mbB**
**Wilhelmstraße 7**
**65185 Wiesbaden (DE)**

(56) Entgegenhaltungen:
• **Narayanan Arvind ET AL: "Bitcoin and Cryptocurrency Technology - Sections: 1.2, 2.4, 3.4, 3.5", , 9. Februar 2016 (2016-02-09), XP055521119, Gefunden im Internet: URL:https://web.archive.org/web/2017060207 5829/https://d28rh4a8wq0iu5.cloudfront.net /bitcointech/readings/princeton_bitcoin_bo ok.pdf [gefunden am 2018-11-05]**
• **Yonathan Sompolinsky ET AL: "SPECTRE:Serialization of Proof-of-work Events: Confirming Transactions viaRecursive Elections", , 10. Juli 2017 (2017-07-10), XP055534165, Gefunden im Internet: URL:https://web.archive.org/web/2017071015 2154/https://eprint.iacr.org/2016/1159.pdf [gefunden am 2018-12-13]**
• **JUAN GARAY ET AL: "The Bitcoin Backbone Protocol: Analysis and Applications", INTERNATIONAL ASSOCIATION FOR CRYPTOLOGIC RESEARCH,, Bd. 20160127:132350, 27. Januar 2016 (2016-01-27), Seiten 1-37, XP061019626, [gefunden am 2016-01-27]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und ein elektronisches Datenspeichersystem zum Speichern von Daten. Insbesondere betrifft die Erfindung ein Verfahren und ein elektronisches Datenspeichersystem zum manipulationssicheren Speichern von Daten in einer bidirektional verketteten Blockchain-Struktur.

Die Möglichkeit einer Veränderung oder gar gezielten Manipulation von digital codierten Daten in elektronischen Speichern stellt eine technische Herausforderung dar.

Aus dem Stand der Technik sind Blockchain-Strukturen, d.h. Blockketten-Strukturen, zur Sicherung von Daten bekannt. Bei diesen Blockchain-Strukturen handelt es sich um unidirektional verketteten Blockchain-Strukturen. Beispielsweise werden entsprechende Blockchain-Strukturen verwendet, um Transaktionen von Kryptowährungen, wie etwa dem Bitcoin-Zahlungssystem, zu protokollieren.

Eine Blockchain-Struktur stellt dabei eine erweiterbare Liste von Datensätzen bereit, welche in Blöcken angeordnet sind. Die Integrität der einzelnen Blöcke wird im Stand der Technik durch eine unidirektionale Verkettung unter Verwendung kryptografischer Prüfwerten der einzelnen Blöcke in Form von Hashwerten gesichert. Dadurch, dass jeder Block eine kryptografische Prüfwert des vorangehenden Blocks inklusive des in dem vorangehenden Block gespeicherten kryptografischen Prüfwerts umfasst, ergibt sich eine Verkettung der Blöcke. Dabei umfasst jeder Block einen Prüfwert, welcher auf den Inhalten aller vorangehenden Blöcke beruht. Somit ist es schwer, eine solche Blockchain nachträglich zu manipulieren, da hierzu nicht nur ein einzelner Block manipuliert werden müsste, sondern alle nachfolgenden Blöcke, weil der Prüfwert jedes nachfolgenden Blocks unter anderem auf dem zu manipulierenden Block beruht. Wird der zu manipulierende Block tatsächlich manipuliert, so ändert sich sein Prüfwert. Dieser geänderte Prüfwert passt nicht mehr zu den Prüfwerten der nachfolgenden Blöcke, wodurch die Manipulation erkennbar wird und bei einer Prüfung mittels der Prüfwerte auffällt.

Bekannte Blockchain-Strukturen implementieren allerdings lediglich eine unidirektionale Verkettung und damit Absicherung der Daten, da bei der Verkettung jeweils nur Dateninhalte vorangehender Blöcke berücksichtigt werden. So lässt sich anhand der Verkettung prüfen, ob ein vorangehender Block einer vorgelegten Blockchain-Struktur manipuliert wurde. Es lässt sich jedoch nicht prüfen, ob die vorgelegten Blockchain-Struktur vollständig ist. Insbesondere lässt sich nicht prüfen, ob möglicherweise ein Teil der Blockchain-Struktur abgeschnitten wurde. Ferner lässt sich nicht prüfen, ob der letzte Block manipuliert wurde.

Bei der Prüfung und Absicherung von Blockchain-Struktur kommen ferner gängige Hashverfahren zum Einsatz. Einzelne Blöcke der Blockchain-Struktur werden über Hashwerte unidirektional miteinander verknüpft. Damit man eine solche Blockchain-Struktur unidirektional miteinander verknüpfter Blöcken auf Manipulation prüfen kann, benötigt man sowohl sämtliche Informationen der einzelnen Blöcke als auch ihre jeweiligen Hashwert. Des Weiteren macht es eine Prüfung einer solchen Blockchain-Struktur erforderlich mit dem ersten Block der entsprechenden Blockchain-Struktur zu beginnen und mit dem letzten Block aufhören.

Das Buch "Bitcoin and Cryptocurrency Technologies" von Arvind Narayanan et al., Entwurf vom 9. Februar 2016, beschreibt in den Kapiteln 1.2, 2.4, 3.4 und 3.5 Hashzeiger und Datenstrukturen, Anreize und den "Proof of Work" bzw. Arbeitsnachweis für das Bitcoin-Kryptowährungssystem sowie Bitcoin-Blöcke und das Bitcoin-Netzwerk.

Der Erfindung liegt die Aufgabe zugrunde, ein verbessertes Verfahren zum manipulationssicheren Speichern von Daten zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen betreffen ein Verfahren zum manipulationssicheren Speichern von Daten in einem elektronischen Speicher unter Verwendung einer bidirektional verketteten Blockchain-Struktur. Die Blockchain-Struktur umfasst eine Mehrzahl von Blöcken, welche jeweils Nutzdaten und Verknüpfungsdaten umfassen, wobei die Nutzdaten eines jeden Blocks der Blockchain-Struktur anhand der Verknüpfungsdaten einer vordefinierten Anzahl an Blöcken der Blockchain-Struktur verifizierbar sind, mit welchen der entsprechende Block bidirektional verkettet ist.

Das Verfahren umfasst:

- Bereitstellen der bidirektional verketteten Blockchain-Struktur,
- Bereitstellen der zu speichernden Daten,
- Erstellen eines zusätzlichen Blocks $B_i$ zum Erweitern der Blockchain-Struktur, welcher die zu speichernden Daten als Nutzdaten umfasst,
- Erstellen einer bidirektionalen Verkettung des zusätzlichen Blocks $B_i$ mit einer vordefinierten Anzahl an vorangehenden Blöcken, welche dem zusätzlichen Block in der Blockchain-Struktur vorangehen,

wobei das Erstellen der bidirektionalen Verkettung ein Ausführen einer Rückwärtsverknüpfung des zusätzlichen Blocks mit der vordefinierten Anzahl an vorangehenden Blöcken und ein Ausführen einer Vorwärtsverknüpfung der vordefinierten Anzahl an vorangehenden Blöcken mit dem zusätzlichen Block umfasst.

Die Rückwärtsverknüpfung umfasst:

o Berechnen eines Prüfwerts der zu speichernden Daten,
o Extrahieren einer Anzahl an ersten Gruppen mit Prüfwertabschnitten aus dem Prüfwert der zu speichernden Daten, wobei die Anzahl an ersten Gruppen der vordefinierten Anzahl an vorangehenden Blöcken entspricht,
o Verteiltes Speichern der Prüfwertabschnitte jeweils einer der ersten Gruppen in den Verknüpfungsdaten eines der Blöcke der vordefinierten Anzahl an vorangehenden Blöcken gemäß einem Verteilungsschema, wobei das Verteilungsschema abhängig von den zu speichernden Daten ist.

Ferner umfasst die Vorwärtsverknüpfung für jeden einzelnen Block der vordefinierten Anzahl an vorangehenden Blöcken:

o Berechnen eines Prüfwerts der Nutzdaten des entsprechenden vorangehenden Blocks,
o Extrahieren einer zweiten Gruppe mit Prüfwertabschnitten aus dem Prüfwert der Nutzdaten des entsprechenden vorangehenden Blocks,
o Verteiltes Speichern der Prüfwertabschnitte der zweiten Gruppe in den Verknüpfungsdaten des zusätzlichen Blocks gemäß einem Verteilungsschema, wobei das Verteilungsschema abhängig von den Nutzdaten des entsprechenden vorangehenden Blocks ist.

Ausführungsformen können den Vorteil haben, dass sie es ermöglichen, eine bidirektional verkettete Blockchain bereitzustellen, deren Blöcke mittels blockabhängiger bidirektionaler Verkettungsfunktionen miteinander verkettet sind. Die Verkettung ermöglicht dabei eine bidirektionale Prüfung der Blockchain-Struktur auf Echtheit bzw. Manipulation. Dabei kann die Blockchain-Struktur nicht nur in einer Richtung, sondern in zwei Richtung geprüft werden.
Unter einer Blockchain-Struktur wird eine Datenstruktur verstanden, welche einen Blockchain bildet. Unter einer "Blockchain" wird eine geordnete Datenstruktur verstanden, welche eine Mehrzahl von miteinander verketteten Datenblöcken umfasst. Insbesondere wird unter einer Blockchain eine Datenbank verstanden, deren Integrität, d.h. Sicherung gegen nachträgliche Manipulation, durch Speicherung eines Prüfwerts, wie etwa eines Hashwertes, des vorangehenden Datensatzes in dem jeweils nachfolgenden Datensatz gesichert ist. Der Prüfwert ist dabei dem Inhalt des vorangehenden Datensatzes zugeordnet und charakterisiert diesen eindeutig. Wird der Inhalt des vorangehenden Datensatzes verändert, so erfüllt dieser nicht mehr das Prüfmerkmal, woraus die Veränderung ersichtlich wird. Im Falle von bekannten Blockchain-Strukturen wird etwa jeder Block der Blockchain eindeutig durch einen Hash-Wert identifiziert und referenziert einen Vorgängerblock in der Blockchain, dessen Hash-Wert er umfasst.
Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde beispielsweise im Jahre 2008 in einem White Paper unter dem Pseudonym Satoshi Nakamoto im Kontext der Kryptowährung Bitcoin beschrieben ("Bitcoin: Peer-to-Peer Electronic Cash System" (https://bitcoin.org/bitcoin.pdf)). In diesem Ausführungsbeispiel enthält jeder Block der Blockchain in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke nicht möglich ist, ohne auch alle nachfolgenden Blöcke ebenfalls zu modifizieren.
Die Sicherheit der Blockchain-Struktur kann beispielsweise dadurch erhöht werden, dass sie veröffentlicht wird bzw. allgemein zugänglich ist und somit ein Vergleich einer vorliegenden Kopie der Blockchain-Struktur mit weiteren veröffentlichten bzw. zugänglichen Kopien derselben Blockchain-Struktur ermöglicht wird.
Ein Prüfwert für Daten ist ein den entsprechenden Daten zugeordneter Wert, welcher die Daten derart eindeutig charakterisiert, dass die Integrität der Daten anhand des Prüfmerkwerts überprüft werden kann. Ein Prüfwert in Form einer Prüfsumme stellt beispielsweise einen Wert bereit, welcher aus den Ausgangsdaten berechnet wurde und dazu konfiguriert ist, zumindest einen Bitfehler in den Daten zu erkennen. Je nachdem wie komplex die Berechnungsvorschrift für die Prüfsumme ist, können mehr als ein Fehler erkannt oder auch korrigiert werden. Bekannte Prüfwerte bzw. Prüfsummen können beispielsweise auf einem Aussummieren von datenwerten, einer Berechnung einer Quersumme, eines Paritätsbit, eines gewichteten Mittelwerts der Daten oder auf komplexeren Berechnungsverfahren beruhen, wie etwa einer zyklische Redundanzprüfung oder der Verwendung einer Hashfunktion.
Ein Prüfwert umfasst beispielsweise eine Sequenz von Zeichen. Numerisch kann dies als eine Bitsequenz dargestellt werden. Prüfwertabschnitt ist eine Teilsequenz der Sequenz eines Prüfwerts. Eine solche Teilsequenz umfasst ein oder mehr Bits. Eine Gruppe von Prüfwertabschnitt ist eine Gruppe von Teilsequenzen der Sequenz eines Prüfwerts. Dabei können die Teilsequenzen jeweils dieselbe Anzahl an Bits oder zumindest teilweise eine unterschiedliche Anzahl an Bits umfassen. Beispielsweise umfasst eine erste Gruppe von Prüfwertabschnitten jedes n-te Bit, etwa jedes 2, 3 oder 4 Bit, einer Sequenz eines Prüfwerts beginnend mit dem ersten Bit der Sequenz, während eine zweite bis (n-1)-te Gruppe von Prüfwertabschnitten jedes n-te Bit, etwa jedes 2, 3 oder 4 Bit, der Sequenz des Prüfwerts beginnend mit dem zweiten, dritten, ..., (n-1)-ten Bit der Sequenz umfasst.

Ein verteiltes Speichern von einer Gruppe von Prüfwertabschnitten in den Verknüpfungsdaten eines Blocks bezeichnet ein Speichern gemäß einem Verteilungsschema, sodass die einzelnen Prüfwertabschnitte nicht direkt aufeinanderfolgen. Um die Prüfwertabschnitten in den Verknüpfungsdaten des Blocks identifizieren zu können ist daher die Kenntnis des entsprechenden Verteilungsschemas notwendig.

Ein verteiltes Speichern mehrerer Gruppen von Prüfwertabschnitten über eine Mehrzahl von Blöcken einer Blockchain-Struktur beschreibt ein Speichern der einzelnen Gruppen in den Verknüpfungsdaten unterschiedlichen Blöcken der Mehrzahl von Blöcken. Die einzelnen Gruppen wiederum können jeweils verteilt in den Verknüpfungsdaten des entsprechenden Blocks gespeichert sein.

Nutzdaten bezeichnen die in den Blöcken der Blockchain-Struktur zu manipulationssicher zu speichernden Daten. Nutzdaten umfassen beispielsweise Sprache-, Text-, Zeichen-, Bild- und/oder Tondaten. Ferner können Nutzdaten auch Zusatzinformationen, d.h. Metadaten, zu dem Block bzw. anderen in dem Block gespeicherten Daten umfassen. Beispielsweise umfassen die Zusatzinformationen Angaben zur Verarbeitung anderer in dem Block gespeicherten Daten, wie etwa Datenformat oder Zeichenkodierung, und/oder Angaben um andere in dem Block gespeicherten Daten die Daten zu charakterisieren, wie etwa Autor, Lizenz, etc. Insbesondere können Nutzdaten beispielsweise ein oder mehrere Identifikatoren des entsprechenden Blocks und/oder der in diesem gespeicherten Daten, ein Erstellungsdatum des entsprechenden Blocks und/oder der in diesem gespeicherten Daten, Angaben zum Eigentümer des Blocks und/oder der in diesem gespeicherten Daten, einen öffentlichen kryptographischen Schlüssel des Eigentümers des Blocks und/oder der in diesem gespeicherten Daten umfassen.

Verknüpfungsdaten sind Daten, welche eine Verifikation der Integrität der Nutzdaten ermöglichen. Beispielsweise umfassen die Verknüpfungsdaten ein oder mehrere von den zu verifizierenden Nutzdaten abhängige Prüfwerte und/oder Prüfwertabschnitte. Durch ein Speichern der Verknüpfungsdaten in einem anderen Block als demjenigen Block der Blockchain-Struktur, dessen Nutzdaten die Verknüpfungsdaten verifizieren, wird eine Verkettung, genauer gesagt eine unilaterale Verkettung, zwischen den beiden Blöcken implementiert. Anhand der Verknüpfungsdaten kann unter Verwendung des Blocks, in welchem die Verknüpfungsdaten gespeichert sind, die Integrität der Nutzdaten in dem anderen Block, für welche die Verknüpfungsdaten generiert wurden, verifiziert werden. Eine Manipulation der Nutzdaten kann anhand der Verknüpfungsdaten erkannt werden.

Eine Rückwärtsverknüpfung bezeichnet eine unidirektionale Verkettung mit einem in der Reihenfolge der Blockchain-Struktur vorangehenden Block, d.h. ein von den Nutzdaten eines Blocks abhängiger Prüfwert und/oder Prüfwertabschnitt wird in den Verknüpfungsdaten eines vorangehenden Blocks gespeichert. Eine Vorwärtsverknüpfung bezeichnet eine unidirektionale Verkettung mit einem in der Reihenfolge der Blockchain-Struktur nachfolgenden Block, d.h. ein von den Nutzdaten eines Blocks abhängiger Prüfwert und/oder Prüfwertabschnitt wird in den Verknüpfungsdaten eines nachfolgenden Blocks gespeichert. Aus einer Kombination von Rückwärtsverknüpfung und Vorwärtsverknüpfung zwischen zwei Blöcken, wobei ein erster der beiden Blöcke, d.h. der nachfolgende Block, mit dem zweiten der beiden Blöcke, d.h. dem vorangehenden Block, durch eine Rückwärtsverknüpfung und der zweite Block mit dem ersten Block durch eine Vorwärtsverknüpfung kryptographisch verbunden ist in Form einer unidirektionalen Verkettung, ergibt sich im Ergebnis eine bidirektionale Verknüpfung zwischen den beiden Blöcken der Blockchain-Struktur.

Durch eine gegenseitige Speicherung von Verknüpfungsdaten, d.h. erste Verknüpfungsdaten von ersten Nutzdaten eines ersten Blocks werden in einem zweiten Block der Blockchain-Struktur gespeichert und zweite Verknüpfungsdaten von zweiten Nutzdaten des zweiten Blocks werden in dem ersten Block der Blockchain-Struktur gespeichert, kann eine bidirektionale Verkettung implementiert werden. Somit können ausgehend von dem ersten Block und den darin gespeicherten zweiten Verknüpfungsdaten die zweiten Nutzdaten des zweiten Blocks verifiziert werden und umgekehrt können ausgehend von dem zweiten Block und den darin gespeicherten ersten Verknüpfungsdaten die ersten Nutzdaten des ersten Blocks verifiziert werden. Damit kann die Sicherheit der Blockchain-Struktur gegenüber bekannten unidirektional verketteten Strukturen erhöht werden, da sich die Blöcke gegenseitig vor über die Verknüpfungsdaten kryptographisch absichern.

Durch ein verteiltes Speichern von Prüfwertabschnitten in den Verknüpfungsdaten eines Blocks der Blockchain-Struktur kann die Sicherheit der kryptographischen Verbindung erhöht werden. Nach Ausführungsformen muss das Verteilungsschema der Prüfwertabschnitte in den Verknüpfungsdaten bekannt sein, um diejenigen Abschnitte der Verknüpfungsdaten identifizieren zu können, bei welchen es sich um Prüfwertabschnitte eines Prüfwerts für die Nutzdaten eines bestimmten Blocks der Blockchain-Struktur handelt. Dies erschwert beispielsweise Manipulationen, da ohne Kenntnis des Verteilungsschemas nicht klar ist, welche Abschnitte der Verknüpfungsdaten zu den Nutzdaten welches Blocks der Blockchain-Struktur gehören.

Durch ein verteiltes Speichern der Verknüpfungsdaten über eine Mehrzahl von Blöcken der Blockchain-Struktur gemäß der Rückwärtsverknüpfung kann die Sicherheit zusätzlich erhöht werden, da in diesem Fall für eine Manipulation der Nutzdaten eine zusätzliche Manipulation der Mehrzahl von Blöcken, welche die Verknüpfungsdaten umfassen notwendig ist. Werden zudem im Gegenzug Verknüpfungsdaten der Nutzdaten der Mehrzahl von Blöcken gemäß der Vorwärtsverknüpfung in dem Block gespeichert, dessen Verknüpfungsdaten in der Mehrzahl von Blöcken gespeichert sind, so wird eine Mehrzahl von bidirektionalen Verknüpfungen zwischen einem Block und einer Mehrzahl von weiteren Blöcken der Blockchain-Struktur implementiert.

Nach Ausführungsformen werden zur Verifikation der Nutzdaten eines Blocks der Blockchain-Struktur die zugehörigen Verknüpfungsdaten berechnet und mit den in der Blockchain-Struktur zur kryptographischen Sicherung verteilt gespeicherten Verknüpfungsdaten verglichen. Nach Ausführungsformen müssen die berechneten Verknüpfungsdaten für eine erfolgreiche Verifikation der Nutzdaten vollständig mit den verteilt gespeicherten Verknüpfungsdaten übereinstimmen. Nach alternativen Ausführungsformen die berechneten Verknüpfungsdaten nicht vollständig mit den verteilt gespeicherten Verknüpfungsdaten übereinstimmen. Beispielsweise ist eine Verifikation bereits erfolgreich, wenn der Grad der Übereinstimmung einen vordefinierten Schwellenwert erreicht. Somit sind die entsprechenden Nutzdaten nicht mit einer Wahrscheinlichkeit von 100% integer, sondern mit einer hinreichenden Wahrscheinlichkeit von unter 100%, z.B. 75%, 80%, 85%, 90%, 95%, 97%, 98% oder 99%. Der Grad an Übereinstimmung, welcher erzielt werden muss, damit Nutzdaten von einem die Integrität der Nutzdaten prüfenden Nutzer bzw. einem prüfenden Computersystem als integer angesehen werden, kann beispielsweise von dem Nutzer bzw. Computersystem gewählt werden. Insbesondere kann ein solcher hinreichender Grad an Übereinstimmung für eine Mehrzahl von Nutzdaten verschiedener Blöcke der Blockchain-Struktur jeweils individuell gewählt werden. Nach Ausführungsformen ist die Wahl des Grad an Übereinstimmung beispielsweise anwendungsabhängig, d.h. davon abhängig wofür die Nutzdaten verwendet werden soll und wie kritisch die Korrektheit bzw. Integrität der Daten für die entsprechende Anwendung ist.

Werden die Verknüpfungsdaten über eine Mehrzahl von Blöcken der der Blockchain-Struktur verteilt gespeichert, so kann es in Abhängigkeit vom Grad an Übereinstimmung, welcher für eine erfolgreiche Verifizierung hinreichend ist, ausreichend für den Vergleich nur einen Teil der Verknüpfungsdaten heranzuziehen, welcher von einer Untergruppe der Mehrzahl von Blöcken bereitgestellt wird. Je höher der zu erreichende Grad an Übereinstimmung ist, desto höher muss nach Ausführungsbeispielen die Anzahl an Blöcken der Untergruppe sein, welche zum Vergleich herangezogen werden, damit der entsprechende Grad an Übereinstimmung erreicht werden kann.

Ausführungsformen können den Vorteil haben, dass der für den Vergleich notwendige Rechenaufwand sowie die dafür benötigte Zeit geringer sind, wenn weniger Blöcke der Blockchain-Struktur für den Vergleich heranzuziehen sind. Mithin kann das Verfahren die Möglichkeit bieten, dass Nutzdaten, welche weniger kritisch sind bzw. welche für weniger kritische Anwendung herangezogen werden, schneller geprüft werden können. Nichtsdestotrotz kann stets eine vollständige Prüfung möglich sein, mit welcher sich die Integrität der geprüften Nutzdaten zu 100% belegen lässt.

Nach Ausführungsformen ist für die verteilte Speicherung der Verknüpfungsdaten jeweils die Zustimmung des Eigentümers des Blocks notwendig, in welchem die Verknüpfungsdaten bzw. ein Teil von diesen gespeichert werden sollen. Die Zustimmung kann beispielsweise in Form eines Verschlüsselns der entsprechenden Verknüpfungsdaten mit einem privaten kryptographischen Schlüssel des jeweiligen Eigentümers erfolgen. Nach Ausführungsformen umfasst die Blockchain-Struktur einen vordefinierten Anteil an Blöcken, deren Eigentümer ein oder mehrere vertrauenswürdige Instanzen bzw. ein Vertrauensdienstanbieter sind. Diese Blöcke sind beispielsweise so über die Blockchain-Struktur verteilt, z.B. geleichmäßig oder ungleichmäßig, dass statistisch gesehen zum Verifizieren eines jeden Blocks der Block-chain-Struktur und/oder eines vordefinierten Mindestanteils an Blöcken jeweils Verknüpfungsdaten von zumindest einem solchen Block eines vertrauenswürdigen Eigentümers notwendig sind. Beispielsweise wird ein Mindestgrad an Übereinstimmung für eine erfolgreiche Verifikation von Nutzdaten vordefiniert, welcher so auf die Verteilung der Blöcke vertrauenswürdiger Eigentümer abgestimmt ist, dass für eine erfolgreiche Verifikation zumindest eine mit einem privaten Schlüssel eines vertrauenswürdigen Eigentümers verschlüsselte Sequenz von Verknüpfungsdaten für den Vergleich heranzuziehen ist. Hierfür muss die entsprechende Sequenz von Verknüpfungsdaten beispielsweise mit einem dem privaten Schlüssel zugeordneten öffentlichen kryptographischen Schlüssel des vertrauenswürdigen Eigentümers entschlüsselt werden. Beispielsweise ist jeder zweite, jeder dritte, jeder vierte oder jeder fünfte Block einem vertrauenswürdigen Eigentümer zugeordnet. Dies kann die Sicherheit des Verfahrens zusätzlich erhöhen.

Schließlich kann das verteilte Speichern der Verknüpfungsdaten auch in Abhängigkeit von der Entfernung, d.h. Anzahl an dazwischen angeordneten Blöcken, zwischen dem Block dessen Nutzdaten kryptographisch gesichert werden soll und dem Block der Blockchain-Struktur erfolgen, in welchen Verknüpfungsdaten zur Implementierung der kryptographischen Sicherung gespeichert werden sollen. Beispielsweise ist der Anteil an Verknüpfungsdaten, welcher in einem Block gespeichert wird indirekt proportional zu der zuvor definierten Entfernung, d.h. mit anderen Worten, je größer die Entfernung, desto geringer der Anteil an Verknüpfungsdaten, welche in dem entsprechenden Block gespeichert werden.

Nach Ausführungsformen ist jeder Block der Blockchain-Struktur jeweils mit einer Mehrzahl von vorangehenden und/oder nachfolgenden Blöcken der Blockchain-Struktur bidirektional verkettet, wobei zwei bidirektional miteinander verkettete Blöcke jeweils Verknüpfungsdaten umfassen, welche von den Nutzdaten des jeweils anderen Blocks der beiden bidirektional miteinander verkettete Blöcke abhängig sind.

Ausführungsformen können den Vorteil haben, dass durch eine bidirektionale Verkettung mit einer Mehrzahl von Blöcken die Sicherheit erhöht werden kann. Eine erfolgreiche Manipulation von Nutzdaten eines Blocks der Block-chain-Struktur müssten in diesem Fall zusätzlich die Verknüpfungsdaten einer Mehrzahl von weiteren Blöcken manipuliert werden.

Nach Ausführungsformen umfasst das Verfahren ferner vor dem Erstellen der bidirektionalen Verkettung:

- Aufteilen der zu speichernden Daten in eine Mehrzahl von Datensätze,
- Berechnen eines Prüfwerts für jeden der Datensätze,
- Speichern der Prüfwerte der Datensätze als Verknüpfungsdaten in dem zusätzlichen Block $B_i$,

wobei das Speichern der Prüfwertabschnitte in den Verknüpfungsdaten jeweils ein zumindest teilweises Überschreiben von Abschnitten der bestehenden Verknüpfungsdaten umfasst.

Ausführungsformen können den Vorteil haben, dass die Prüfwerte in den Verknüpfungsdaten desselben Blocks gespeichert werden, in welchem auch die zu speichernden Daten gespeichert, für welche die Prüfwerte berechnet wurden. Mithin wird also nicht nur eine Überprüfung der Integrität der in dem Block gespeicherten Daten durch Prüfwerte bzw. Prüfwertabschnitte, welche in Verknüpfungsdaten anderer Blöcke der Blockchain-Struktur gespeichert sind, ermöglicht. Zusätzlich können die Verknüpfungsdaten des Blocks mit den zu prüfenden Daten selbst zu deren Integritätsprüfung herangezogen werden. Dies kann eine erste Prüfung der Integrität allein auf Basis des Blocks mit den zu prüfenden Nutzdaten ermöglichen. Zusätzlich kann eine Prüfung über die mit dem zu prüfenden Block bidirektional verkettenden weiteren Blöcke der Blockchain-Struktur erfolgen. Dadurch wird die Datensicherheit der gespeicherten Nutzdaten gegenüber Manipulationen zusätzlich erhöht.

Nach Ausführungsformen umfasst das Aufteilen der zu speichernden Daten ein Aufteilen der in dem zusätzlichen Block $B_i$ der Blockchain-Struktur zu speichernden Daten $D_i$ in b Datensätze gleicher Länge und als Prüfwert wird für jeden der Datensätze ein Hashwert $H_x$ berechnet:

$$H_{x=1, \ldots, b} = H\left(\ominus_{x=1, \ldots, b}^{b}(D_i)\right),$$

wobei $\ominus_I^r(s)$ den I-ten Datenabschnitt einer Zeichensequenz s bei einer Aufteilung der Zeichensequenz s in r gleichlange Datenabschnitte und $\left(H\left(\ominus_I^r(s)\right)\right)$ den Hashwert des I-ten Datenabschnitt bezeichnet.

Ausführungsformen können den Vorteil haben, dass sie einen effizientes Verfahren zum Berechnen der Prüfwerte der zu speichernden Nutzdaten bereitstellen.

Nach Ausführungsformen umfasst das Speichern der Prüfwerte der Datensätze ferner:

- Erstellen eines Fehlerkorrekturcodes für die zu speichernden Prüfwerte der Datensätze,
- Speichern des Fehlerkorrekturcodes als Verknüpfungsdaten in dem zusätzlichen Block $B_i$.

Ein Fehlerkorrekturcode bezeichnet eine Bitstruktur, z.B. Bitsequenz, welche aus einer Kodierungen von Daten, z.B. Verknüpfungsdaten in Form von Prüfwerten, resultiert, und Informationen bereitstellt, welches es ermöglichen Fehler der kodierten Daten zu erkennen und zu beheben.

Zur Erstellung des Fehlerkorrekturcodes wird ein Fehlerkorrekturverfahren angewendet. Ein Fehlerkorrekturverfahren ist ein Verfahren, welches dazu dient, Fehler bei der Speicherung von Daten zu erkennen und zu korrigieren. Um dies zu erreichen wird ein Fehlerkorrekturcode der entsprechenden Daten, z.B. Verknüpfungsdaten in Form von Prüfwerten, erstellt, welcher eine zusätzliche Redundanz, etwa in Form von Fehlerkorrekturbits umfasst, die zur Bestimmung und Korrektur von Fehlern der entsprechenden Daten, z.B. Verknüpfungsdaten in Form von Prüfwerten, genutzt werden können. Ein Fehlerkorrekturbit oder Paritätsbit ist ein Bit, welches zusätzlich zu ein oder mehreren Bits der eigentlichen Daten, z.B. Verknüpfungsdaten, generiert wird, und welches zur Kontrolle der Integrität der besagten ein oder mehreren Bits der Daten dient.

Exemplarische Fehlerkorrekturverfahren bzw. aus diesen resultierende Fehlerkorrekturcodes können beispielswiese ein oder mehrere der folgenden Verfahren bzw. Codes umfassen: den Bose-Ray-Chaudhuri-Code (BCH), Faltungscode, Fountain-Code, Golay-Code, Hamming-Code, Low-Density-Parity-Check-Code (LDPC), MDS-Code, Nordstrom-Robinson-Code (Preparata-Code), die mehrdimensionale Paritätsprüfung, den Rank-Code, Reed-Muller-Code, Reed-Solomon-Code (RS), Repeat-Accumulate-Code (RA), Simplex-Code, das Slicing by Eight (SB8), die Trellis-Code-Modulation (TCM), den Turbo-Code (TCC, TPC, etc.), Wiederholungscode, Woven-Code, die Zyklische Redundanzprüfung.

Ausführungsformen können den Vorteil haben, dass das Verwenden eines Fehlerkorrekturcodes es erlaubt die Verknüpfungsdaten eines Blocks der Blockchain-struktur im Zuge der Vorwärts- oder Rückwärtsverknüpfungen teilweise mit Prüfwerten bzw. Prüfwertabschnitte von Blöcken zu überschreiben, mit welchen der entsprechende Block durch die Vorwärts- oder Rückwärtsverknüpfungen bidirektional verkettet wird. Das teilweise Überschreiben führt Fehler in die bestehenden Verknüpfungsdaten, z.B. die Prüfwerte der Nutzdaten des entsprechenden Blocks oder Prüfwerte bzw. Prüfwertabschnitte von zuvor erstellten bidirektionalen Verkettungen. Die Verwendung des Fehlerkorrekturcodes ermöglicht es, sowohl die teilweise überschriebenen Daten zur korrigieren, d.h. zu rekonstruieren. Somit können sowohl die teilweise überschriebenen Daten als auch die im Zuge des Überschreibens neu hinzugefügten Daten, d.h. Prüfwerte bzw. Prüfwertabschnitte, genutzt werden z.B. zur Prüfung der Datenintegrität der Nutzdaten, für welche sie berechnet wurden.

Durch die Verwendung eines Fehlerkorrekturcodes kann zum einen die in den Verknüpfungsdaten zu speichernde Datenmenge verringert werden, zum anderen erschwert es das teilweise Überschreiben und Hinzufügen des Fehlerkorrekturcodes zu identifizieren, welche Verknüpfungsdaten zu welchem Prüfwert bzw. Prüfwertabschnitt oder Fehlerkorrekturcode gehören. Ohne dieses Wissen können aber die von den Verknüpfungsdaten bereitgestellten Prüfwerte bzw. Prüfwertabschnitte im Zuge einer Datenmanipulation nicht derart mit Manipuliert werden, dass dies nachträglich nicht auffallen würde.

Nach Ausführungsformen werden die zu speichernden Prüfwerte in zwei Sequenzen $V_1$ und $V_2$ der Verknüpfungsdaten angeordnet und der Fehlerkorrekturcode wird als dritte Sequenz $V_3$ der Verknüpfungsdaten in Form einer bitweisen XOR-Verknüpfung der ersten beiden Sequenzen erstellt:

$$V_3[x] = XOR(V_1[x], V_2[x]),$$

wobei x das x-te Bit in der jeweiligen Sequenz bezeichnet.

Ausführungsformen können den Vorteil haben, dass ein effizientes Verfahren zum Erstellen des Fehlerkorrekturcodes bereitgestellt wird. Eine XOR-Verknüpfung, auch Kontravalenz genannt, ergibt 1, wenn die beiden miteinander zu verknüpfenden Bits unterschiedlich sind, und 0, wenn die beiden miteinander zu verknüpfenden Bits identisch sind.

Nach Ausführungsformen ist jedem Block der Blockchain-Struktur jeweils ein Eigentümer zugeordnet, wobei jedem der Eigentümer jeweils ein asymmetrisches kryptographisches Schlüsselpaar zugeordnet ist, welches einen privaten und einen öffentlichen kryptographischen Schlüssel umfasst. Die ersten und zweiten Gruppen mit Prüfwertabschnitten werden jeweils mit dem privaten kryptographischen Schlüssel des Eigentümers verschlüsselt, welcher dem Block der Blockchain-Struktur zugeordnet ist, in dessen Verknüpfungsdaten die Prüfwertabschnitte der entsprechenden Gruppe gespeichert werden.

Ausführungsformen können den Vorteil haben, dass die Prüfwertabschnitte durch die Verschlüsselung gegen Manipulationen geschützt werden. Zum Erzeugen manipulierter Prüfwertabschnitte müsste der Manipulator in den Besitz der privaten Schlüssel der entsprechenden Eigentümer gelangen. Werden die Gruppen von Prüfabschnitten über mehrere Blöcke der Blockchain-Struktur mit jeweils unterschiedlichen Eigentümern verteilt gespeichert, wären nicht nur der Besitz eines, sondern einer Mehrzahl von privaten Schlüsseln notwendig. Ferner können Ausführungsformen den Vorteil haben, dass die Prüfwertabschnitte nur mit Zustimmung der entsprechenden Eigentümer in den Blöcken bzw. deren Verknüpfungsdaten gespeichert werden können, da nur die entsprechenden Eigentümer im Besitz der notwendigen privaten Schlüssel sind. Schließlich kann die Verschlüsselung den weiteren Vorteil haben, dass eine Rekonstruktion der Verteilt gespeicherten Prüfabschnitte zusätzlich erschwert wird und damit die Manipulationssicherheit weiter erhöht wird. Zwar können die Verschlüsselungen mit den öffentlichen Schlüsseln der entsprechenden asymmetrischen kryptographischen Schlüsselpaare entschlüsselt werden. Jedoch müssen zur Entschlüsselung zunächst die zusammengehörigen zu entschlüsselnden Daten, d.h. Prüfwertabschnitte, identifiziert werden, was im Falle von verschlüsselten Daten schwieriger ist, als im Falle von unverschlüsselten Daten.

Nach Ausführungsformen ist werden die ersten und zweiten Gruppen mit Prüfwertabschnitte jeweils bitweise verteilt in den Verknüpfungsdaten der entsprechenden Blöcke der Blockchain-Struktur gespeichert werden.

Ausführungsformen können den Vorteil haben, dass durch eine bitweise Verteilung eine maximal feingranulare Verteilung und damit eine effektive Vermischung der gespeicherten Prüfwertabschnitte implementiert werden kann. Dies kann einen hohen Grad an Sicherheit vor Manipulationen bieten. Zudem kann ein bitweises Fehlerkorrekturverfahren zur Sicherung der Prüfwertabschnitte verwendet werden gesichert.

Nach Ausführungsformen variiert die Zahl an Prüfwertabschnitten in den ersten Gruppen jeweils in Abhängigkeit vom Abstand des Blocks der Blockchain-Struktur, in dessen Verknüpfungsdaten die Prüfwertabschnitte der entsprechenden Gruppe gespeichert werden, zu dem zusätzlichen Block $B_i$. Nach Ausführungsformen variiert die Zahl an Prüfwertabschnitten in den zweiten Gruppen jeweils in Abhängigkeit vom Abstand des Blocks der Blockchain-Struktur, aus dessen Nutzdaten die Prüfwertabschnitte der entsprechenden Gruppe berechnet und extrahiert wurden, zum zusätzlichen Block $B_i$.

Ausführungsformen können den Vorteil haben, dass der Beitrag der einzelnen Blöcke zur Manipulationssicherung von Nutzdaten eines gegebenen Blocks mit deren Abstand mit dem Abstand von dem entsprechenden Block, d.h. der Anzahl der dazwischen in der Blockchain-Struktur angeordneten weiteren Blöcken, variieren kann. Beispielsweise kann der Beitrag mit der Entfernung abnehmen. Soll die Integrität der zu prüfenden Nutzdaten nur bis zu einem bestimmten Grad bestätigt werden, so kann es genügen nur eine Auswahl der Blöcke mit relevanten Prüfwertabschnitten für die Prüfung heranzuziehend.

Nach Ausführungsformen umfasst das Erstellen der bidirektionalen Verkettung des zusätzlichen Blocks $B_i$ eine bidirektionale Verkettung mit k Blöcken $B_v$ der Blockchain-Struktur mit v = i-x und x = 1, ..., k, welche dem zusätzlichen Block $B_i$ unmittelbar vorausgehen,

wobei zur Rückwärtsverknüpfung für jeden der k Blöcke $B_v$ aus den zu speichernden Daten $D_i$ jeweils Rückwärtsverknüpfungsdaten $Ve^{rw}$ berechnet werden mit

$$Ve^{rw} = E\left(\oslash_x^1\left(H(B_i.D_i)\right), O(B_v).K_{Pr}\right),$$

wobei $H(B_i.D_i)$ den Hashwert der Daten $D_i$ des Blocks $B_i$, $\oslash_x^g(s)$ eine Auswahl und Aneinanderreihung jedes x-ten Zeichens aus einer Zeichensequenz s ab dem Offset g, $O(B_v).K_{Pr}$ den privaten kryptographischen Schlüssel $K_{Pr}$ der Eigentümers $O(B_v)$ des Blocks $B_v$ und E(m, K) eine mit dem kryptographischen Schlüssel K verschlüsselte Zeichensequenz m bezeichnet,

für die Rückwärtsverknüpfungsdaten $Ve^{rw}$ wird ein Positionierer $Po^{rw}$ zur Rückwärtsverknüpfung mit

$$Po^{rw} = E\left(\oslash_x^1\left(H\left(\oplus\left(\ominus_2^2(B_i.D_i), \ominus_1^2(B_i.D_i)\right)\right)\right), O(B_v).K_{Pr}\right)$$

berechnet, welcher ein von den zu speichernden Daten $D_i$ abhängiges Verteilungsschema implementieren, wobei $\oplus(s_1, s_2)$ eine Aneinanderreihung der Zeichensequenzen $s_1$ und $s_2$ bezeichnet,

wobei die Verknüpfungsdaten der k Blöcke $B_v$ jeweils in $w \in \mathbb{N}$ Abschnitte aufgeteilt sind und die Rückwärtsverknüpfung für jeden der k Blöcke $B_v$ die folgenden Verfahrensschritte beginnend mit p = 0, q = 1 umfasst:

1)

$$q = \left(\left(\left(q + Po^{rw}[p] + 1\right) \% w\right) + 1\right),$$

2)

$$B_v.V_q[o+p] = Ve^{rw}[p] \text{ mit } o = \left(\sum_{j=1, ..., x} \frac{|V_1|}{2^j}\right) + 1,$$

3) p = p+1, falls p ≤ $|Ve^{rw}|$, wobei $|Ve^{rw}|$ die Länge der Rückwärtsverknüpfungsdaten $Ve^{rw}$ bezeichnet, wird die Rückwärtsverknüpfung mit Schritt 1) fortgesetzt, ansonsten wird die Ausführung der Rückwärtsverknüpfung für den entsprechenden Block $B_v$ beendet,

wobei zur Vorwärtsverknüpfung für jeden der k Blöcke $B_v$ aus den Daten $D_v$ des entsprechenden Blocks $B_v$ Vorwärtsverknüpfungsdaten $Ve^{vw}$ berechnet werden mit

$$Ve^{vw} = E\left(\oslash_x^1\left(H(B_v.D_v)\right), O(B_i).K_{Pr}\right),$$

für die Vorwärtsverknüpfungsdaten $Ve^{vw}$ wird ein Positionierer $Po^{vw}$ zur Rückwärtsverknüpfung mit

$$Po^{vw} = E\left(\oslash_x^1\left(H\left(\oplus\left(\ominus_2^2(B_v.D_v), H\left(\ominus_1^2(B_v.D_v)\right)\right)\right)\right), O(B_i).K_{Pr}\right)$$

berechnet,

wobei die Verknüpfungsdaten des zusätzlichen Blocks $B_i$ in $w \in \mathbb{N}$ Abschnitte aufgeteilt sind und wobei die Vorwärtsverknüpfung für jeden der k Blöcke $B_v$ die folgenden Verfahrensschritte beginnend mit p = 0, q = 1 umfasst:

1)

$$q = \left(\left(\left(q+Po^{vw}[p]+1\right) \% w\right)+1\right),$$

2) $B_i.V_q[o+p] = Ve^{vw}[p]$ mit $o = \left(\sum_{j=1,...,x} \frac{|V_1|}{2^{j-1}}\right) + 1$, falls x ≥ 2, sonst o = 1,

3) p = p+1, falls p ≤ $|Ve^{vw}|$, wobei $|Ve^{vw}|$ die Länge der Vorwärtsverknüpfungsdaten $Ve^{vw}$ bezeichnet, wird das Verfahren mit Schritt 1) fortgesetzt, ansonsten wird die Ausführung der Vorwärtsverknüpfung für den entsprechenden Block $B_v$ beendet,

Ausführungsformen können den Vorteil haben, dass ein effizientes Verfahren zum bidirektionalen Verketten des zusätzlichen Blocks bereitgestellt wird.

Die bidirektionale Verkettung erfolgt beispielsweise mit 2, 3, 4, 5, 7 oder 8 Blöcken der Blockchain-Struktur.

Für die Rückwärtsverknüpfung werden aus den Nutzdaten $D_i$ des zusätzlichen Blocks $B_i$ Rückwärtsverknüpfungsdaten $Ve^{rw}$ für jeden der Blöcke berechnet, mit welchem eine bidirektionale Verkettung hergestellt werden soll. Hierzu wird aus den Nutzdaten zunächst ein Hashwert als Prüfwert berechnet. Aus diesem Hashwert werden Prüfwertabschnitte bzw. Zeichen, d.h. Bits, ausgewählt. Die so entstehende Gruppe von Prüfwertabschnitten bzw. Bits wird mit dem privaten Schlüssel des Eigentümers desjenigen Blocks der Blockchain-Struktur verschlüsselt, in dessen Verknüpfungsdaten die Gruppe von Prüfwertabschnitten bzw. Bits gespeichert werden soll. Durch die Berechnung der Rückwärtsverknüpfungsdaten $Ve^{rw}$ werden die einzelnen Abschnitte bzw. Bits des Prüfwerts der Nutzdaten in Gruppen gruppiert und jeweils einem der Blöcke mit denen eine bidirektionale Verkettung hergestellt werden soll zugeordnet. Somit resultieren k Datensätze von Rückwärtsverknüpfungsdaten $Ve^{rw}$ für die k Blöcke, wobei jeder der Datensätze mit Rückwärtsverknüpfungsdaten $Ve^{rw}$ eine der k Gruppen von Prüfwertabschnitten umfasst, in welche der Prüfwert der Nutzdaten zerlegt wird. Die Berechnung der Rückwärtsverknüpfungsdaten $Ve^{rw}$ dient somit der Verteilung der Prüfwertabschnitte auf die k Blöcke.

Ferner wird ein Positionierer $Po^{rw}$ zur Rückwärtsverknüpfung für jeden der Datensätze mit Rückwärtsverknüpfungsdaten $Ve^{rw}$ berechnet. Hierzu werden die Nutzdaten $D_i$ des zusätzlichen Blocks $B_i$ durchmischt. Aus den Durchmischten Nutzdaten wird zunächst ein Hashwert berechnet. Aus diesem Hashwert werden Hashwertabschnitte bzw. Bits ausgewählt. Die so entstehende Gruppe von Hashwertabschnitten bzw. Bits wird mit dem privaten Schlüssel des Eigentümers desjenigen Blocks der Blockchain-Struktur verschlüsselt, in dessen Verknüpfungsdaten die Rückwärtsverknüpfungsdaten $Ve^{rw}$, für welche der Positionierer $Po^{rw}$ berechnet wird, gespeichert werden sollen. Die Berechnung des Positionierer $Po^{rw}$ unterscheidet sich dabei in diesem Beispiel von der Berechnung der Rückwärtsverknüpfungsdaten $Ve^{rw}$ nur durch die zusätzliche Vermischung der Nutzdaten $D_i$ des zusätzlichen Blocks $B_i$. Es entstehen somit zwei Gruppen bzw. Sequenzen von Bits, welche gleiche Länge aber unterschiedliche Bitwerte an den einzelnen Positionen der Bitsequenz aufweisen. Hierbei dient der Positionierer $Po^{rw}$ der Festlegung der Verteilung der Bits der Rückwärtsverknüpfungsdaten $Ve^{rw}$ in den Verknüpfungsdaten des zugehörigen Blocks der k Blöcke der Blockchain-Struktur, für welchen die Rückwärtsverknüpfungsdaten $Ve^{rw}$ berechnet wurden.

Für jeden der k Blöcke wird beispielsweise der folgende Algorithmus ausgeführt: Die Verknüpfungsdaten sind beispielsweise jeweils in w = 3 Abschnitte aufgeteilt. Der Parameter p bezeichnet das Bit in der Bitsequenz von $Ve^{rw}$, d.h. $Ve^{rw}[p]$, welches unter Verwendung des zugehörigen Bits in der Bitsequenz von $Po^{rw}$, d.h. $Po^{rw}[p]$, in den Verknüpfungsdaten des zugehörigen Blocks gespeichert werden soll. Der Parameter q bezeichnet den Abschnitt der Verknüpfungsdaten des zugehörigen Blocks in welchem das Bit gespeichert werden soll. Beginnenden mit p = 0, q = 1 wird zunächst q berechnet: q = (((q+$Po^{rw}$[p]+1)%3)+1). Hierbei kommt im vorliegenden Fall als Wert für q von 1, 2 oder 3 heraus, allgemein gilt q∈(1,2, ..., w). Der Parameter q könnte auch mit einem beliebigen anderen Integerwert initiiert werden. Der Parameter q legt fest in welchem der w Abschnitte $V_q$ der Verknüpfungsdaten von $B_v$ das entsprechende Bit der Rückwärtsverknüpfungsdaten $Ve^{rw}[p]$ gespeichert wird: $B_v.V_q[o+p]$ = $Ve^{rw}[p]$. Hierbei bezeichnet

$$o = \left(\sum_{j=1,...,x} \frac{|V_1|}{2^j}\right)+1$$

einen Offset, welcher von der Länge des ersten Abschnitts $V_1$ der Verknüpfungsdaten des Blocks $B_v$ und der Entfernung x des Blocks $B_v$ von dem zusätzlichen Block $B_i$. Anschließend wird der Parameter p inkrementiert, d.h. p = p+1. Diese Schleife wird solange iteriert bis alle Bits der Rückwärtsverknüpfungsdaten Ve$^{rw}$ verteilt sind.

In analoger Weise wird für jeden der k Blöcke B$_v$ ein Prüfwert der Nutzdaten des entsprechenden Blocks berechnet, eine Gruppe von Prüfwertabschnitten bzw. Bits in Form von Vorwärtsverknüpfungsdaten Ve$^{vw}$ ausgewählt und unter Verwendung eines Positionierers Po$^{vw}$ zur Rückwärtsverknüpfung in den w Abschnitten der Verknüpfungsdaten des zusätzlichen Blocks B$_i$ gespeichert.

Nach Ausführungsformen umfasst das Verfahren ferner ein Verifizieren eines Blocks der Blockchain-Struktur, wobei das Verifizieren umfasst:

- Aufteilen der Nutzdaten des zu verifizierenden Blocks in eine Mehrzahl von Datensätze,
- Berechnen eines Prüfwerts für jeden der Datensätze,
- Vergleichen der berechneten Prüfwerte mit den von den Verknüpfungsdaten des zu verifizierenden Blocks umfassten Prüfwerten der Nutzdaten des zu verifizierenden Blocks.

Nach Ausführungsformen umfasst das Verifizieren ferner ein Rekonstruieren der von den Verknüpfungsdaten umfassten Prüfwerte der Nutzdaten des zu verifizierenden Blocks unter Verwendung des Fehlerkorrekturcodes.

Ausführungsformen können den Vorteil haben, dass sie ein effizientes Verfahren zum Verifizieren eines Blocks der Blockchain-Struktur bzw. den von dem entsprechenden Block umfassten Nutzdaten bereitstellen. Stimmen die für die Nutzdaten berechneten Prüfwerte mit den als Verknüpfungsdaten für den zu prüfenden Block gespeicherten Prüfwerten überein bzw. zum einem ausreichenden Grad überein, so kann daraus auf die Integrität der geprüften Nutzdaten geschlossen werden.

Nach Ausführungsformen umfasst das Verifizieren ferner:

- Berechnen zumindest eines Teils der unter Verwendung der Nutzdaten des zu verifizierenden Blocks erstellten und in den Verknüpfungsdaten derjenigen weiteren Blöcke der Blockchain-Struktur verteilt gespeicherten Prüfwertabschnitten, welche mit dem zu verifizierenden Block bidirektional verkettet sind,
- Vergleichen der berechneten Prüfwertabschnitte mit den gespeicherten Prüfwertabschnitten, wobei der zu verifizierende Block im Falle einer Übereinstimmung der miteinander verglichenen Prüfwertabschnitte erfolgreich verifiziert ist.

Ausführungsformen können den Vorteil haben, dass sie ein effizientes Verfahren zum Verifizieren eines Blocks der Blockchain-Struktur bzw. den von dem entsprechenden Block umfassten Nutzdaten unter Verwendung der bidirektional verketteten Blöcke bereitstellen.

Nach Ausführungsformen erfolgt die Berechnung der Prüfwerte und/oder Prüfwertabschnitte im Zuge des Verifizierens unter Verwendung einer Hashfunktion. Ausführungsformen können den Vorteil haben, dass ein effizientes und sicheres Verfahren zum Berechnen der Prüfwerte bzw. Prüfwertabschnitte bereitgestellt wird. Eine Hashfunktion bildet eine Bitsequenz beliebiger Länge auf eine Bitsequenz mit fester Länge ab. Zur Berechnung des Hashwerts kann beispielswiese ein SHA-Algorithmus (Secure Hash Algorithm) verwendet werden.

Nach Ausführungsformen umfasst das Berechnen der Prüfwertabschnitte im Zuge des Verifizierens:

- Verschlüsseln der Prüfwertabschnitte jeweils mit dem privaten kryptographischen Schlüssel des Eigentümers, welcher dem Block der Blockchain-Struktur zugeordnet ist, in dessen Verknüpfungsdaten die entsprechenden Prüfwertabschnitte gespeichert sind.

Ausführungsformen können den Vorteil haben, dass die Verteilung der verschlüsselten Prüfwertabschnitte in den Verknüpfungsdaten der jeweiligen Blöcke von dem Ergebnis der Verschlüsslung abhängt. Um also identifizieren zu können, welche der von den entsprechenden Verknüpfungsdaten umfassten Bits zu den für die Prüfung relevanten Prüfwertabschnitten gehören, wird das entsprechende Verteilungsschema benötigt. Dieses Verteilungsschema ist jedoch abhängig vom Ergebnis der Verschlüsslung. Daher müssen die berechneten Prüfwertabschnitte erst verschlüsselt werden, bevor sie mit den gespeicherten Prüfwertabschnitten auf eine Übereinstimmung hin geprüft werden können. Diese Verschlüsselung beruht allerdings auf dem privaten Schlüssel des jeweiligen Eigentümers des entsprechenden Blocks, in welchem die für die Prüfung heranzuziehenden Prüfwertabschnitte gespeichert sind. Eine Prüfung ist somit nur mit Hilfe des jeweiligen Eigentümers möglich, welcher allein über den notwendigen privaten Schlüssel verfügt. Mithin kann die Prüfung nur mit Zustimmung des entsprechenden Eigentümers erfolgen.

Nach Ausführungsformen wird dem entsprechenden Eigentümer eine Verschlüsselungsanfrage mit den zu verschlüsselnden Prüfwertabschnitten zugesendet. Der Eigentümer überprüft die Anfrage und verschlüsselt die Prüfwertabschnitte mit seinem privaten Schlüssel. Die verschlüsselten Prüfwertabschnitte werden von dem Eigentümer an den Absender der Verschlüsselungsanfrage zurückgesendet. Der Absender der Verschlüsselungsanfrage kann die empfangenen verschlüsselten Prüfwertabschnitte unter Verwendung des öffentlichen Schlüssels des Eigentümers überprüfen. Bei einer Entschlüsselung mit dem öffentlichen Schlüssel müssen sich im Falle einer fehlerfreien Verschlüsslung die in der Anfrage gesendeten unverschlüsselten Prüfwertabschnitten als Ergebnis ergeben.

Nach Ausführungsformen umfassen die zu speichernden Daten Daten, welche kennzeichnend für den Inhalt eines digital codierten Dokuments sind, wobei das Bereitstellen der zu speichernden Daten ein Empfangen der Daten mittels einer Kommunikationsschnittstelle über ein Netzwerk von einem das digital codierte Dokument erstellenden Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Daten die Integrität eines digital codierten Dokuments geprüft werden kann. Für ein vorliegendes digital codiertes Dokument können Daten, welche kennzeichnend für den Inhalt dieses Dokuments sind, berechnet werden. Beispielsweise kann ein Hashwert des Inhalts des digital codierten Dokuments berechnet werden. Diese Daten können mit der Blockchain-Struktur verglichen werden: Umfasst die Blockchain-Struktur die entsprechenden Daten, wird die Integrität des digitalen codierten Dokuments bestätigt und dieses als authentisch anerkannt. Umfasst die Blockchain-Struktur die entsprechenden Daten nicht, wird die Integrität des digital codierten Dokuments verneint. Die Blockchain-Struktur kann hierbei den Vorteil bieten, dass deren Größe kompakt gehalten werden kann, wenn diese nur Hashwerte der digital codierten Dokumente umfasst. Ferner können anhand der Hashwerte der digital codierten Dokumente keine Rückschlüsse auf die Inhalte der entsprechenden Dokumente gezogen werden, wodurch die Sicherheit erhöht wird. Schließlich kann eine aktuelle Version der Blockchain-Struktur beispielsweise auf ein tragbares mobiles Telekommunikationsgerät über das Netzwerk heruntergeladen und zur Prüfung von digital codierten Dokumenten selbst dann genutzt werden, wenn keine Netzwerkverbindung zur Verfügung steht, d.h. sich das tragbare mobile Telekommunikationsgerät in einem Offline-Modus befindet.

Unter einem "Dokument" wird insbesondere eine Nachrichtenmeldung, ein Text, eine Urkunde, ein Zeugnis, oder ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln. Eine Urkunde ist eine Erklärung in Text- oder Schriftform, welche einen bestimmten Tatbestand bzw. Sachverhalt fixiert. Zudem kann die Urkunde den Austeller der Urkunde identifizieren.

Unter einem digital codierten Dokument wird ein Datenkonstrukt zur elektronischen Datenverarbeitung verstanden, welches digital codierte Daten umfasst. Hierbei kann es sich insbesondere um eine elektronische Datei eines beliebigen Dateiformats handeln, wie etwa eine Text-, Tabellen-, Ton- Bild- und/oder Videodatei. Nach Ausführungsformen kann die elektronische Datei ausführbar oder nicht ausführbar sein. Bei einem digital codierten Dokument kann es sich um beispielsweise um ein Dokument handeln, welche durch Digitalisieren eines Dokuments mit physischen Dokumentenkörper, d.h. eine Umwandlung der von dem physischen Dokumentenkörper umfassten Daten in einen Binärcode, in Dateiform angelegt oder überführt wurden. Insbesondere ist die Gültigkeit eines solchen Dokuments unabhängig von dem Vorhandensein eines fest zugeordneten Dokumentenkörpers.

Nach Ausführungsformen wird kann ein digital codiertes Dokument beispielsweise erstellt werden, indem eine Datei mit den Daten des entsprechenden Dokuments an einem Computer erzeugt wird. Ferner kann ein virtuelles Dokument beispielsweise auch durch Einscannen oder Ablichten eines physischen Dokumentenkörpers, wie etwa einem Dokument auf Papier, erstellt werden.

Nach Ausführungsformen umfassen die zu speichernden Daten Daten einer Transaktion, wobei das Bereitstellen der zu speichernden Daten ein Empfangen der Daten mittels einer Kommunikationsschnittstelle über ein Netzwerk von einem an der Ausführung der Transaktion beteiligten Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Daten Transaktionen protokolliert werden können. Bei den Transaktionen kann es sich beispielsweise um Transaktionen einer Kryptowährung einer klassischen Währung, einen Verkauf, einen Versand, eine Eigentumsübertragung oder eine Übergabe eines Gegenstands und/oder eines digital codierten Dokuments handeln.

Nach Ausführungsformen umfassen die zu speichernden Daten Zustandsdaten einer Vorrichtung, wobei das Bereitstellen der zu speichernden Daten ein Empfangen der Daten mittels einer Kommunikationsschnittstelle über ein Netzwerk von einem die Zustandsdaten mittels eines Sensors erfassenden Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Zustandsdaten der Zustand und/oder die Zustandshistorie einer Vorrichtung protokolliert werden kann. Bei einer solchen Vorrichtung kann es sich beispielsweise um eine Produktionsvorrichtung, eine Komponente eines Computersystems, eine Schließanlage, eine Zugangskontrollvorrichtung oder ein Fahrzeug handeln. Unter einem "Fahrzeug" wird hier ein mobiles Verkehrsmittel verstanden. Ein solches Verkehrsmittel kann beispielsweise dem Transport von Gütern (Güterverkehr), von Werkzeugen (Maschinen oder Hilfsmittel) oder Personen (Personenverkehr) dienen. Fahrzeuge umfassen insbesondere auch motorisierte Verkehrsmittel. Bei einem Fahrzeug kann es sich beispielsweise um ein Landfahrzeug, ein Wasserfahrzeug und/oder ein Luftfahrzeug handeln. Ein Landfahrzeug kann beispielsweise sein: ein Automobil, wie etwa ein Personenkraftwagen, Omnibus oder ein Lastkraftwagen, ein motorbetriebenes Zweirad, wie etwa ein Motorrad, Kleinkraftrad, Motorroller oder Motorfahrrad, ein landwirtschaftlicher Traktor, Gabelstapler, Golfmobil, Autokran. Darüber hinaus kann es sich bei einem Landfahrzeug auch um ein Schienen gebundenes Fahrzeug handeln. Wasserfahrzeug kann beispielsweise sein: ein Schiff oder Boot. Ferner kann ein Luftfahrzeug beispielsweise sein: ein Flugzeug oder Hubschrauber. Unter einem Fahrzeug wird insbesondere auch ein Kraftfahrzeug verstanden.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, elektromagnetische Feldstärke, Helligkeit, Beschleunigung, Lageänderung, pH-Wert, Ionenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten, Zustände und/oder Zustandsänderung von elektronischen Geräten bzw. in Folge einer Benutzung durch einen Nutzer wiedergeben.

Die Zustandsdaten können nach Ausführungsformen auch Daten über von der Vorrichtung ausgeführte Funktionen umfassen. Beispielsweise können so von einer Produktionsvorrichtung ausgeführte Fertigungs- und/oder Bearbeitungsvorgänge protokolliert werden. Ferner können beispielsweise Aktionen einer Zugangskontrollvorrichtung protokolliert werde, wobei die protokollierten Daten Informationen darüber umfassen können, wann wer über die Zugangskontrollvorrichtung Zugang zu einem gesicherten Bereich erhalten hat.

Ausführungsformen betreffen ein elektronisches Datenspeichersystem zum manipulationssicheren Speichern von Daten in einer bidirektional verketteten Blockchain-Struktur,

wobei die Blockchain-Struktur eine Mehrzahl von Blöcken umfasst, welche jeweils Nutzdaten und Verknüpfungsdaten umfassen, wobei die Nutzdaten eines jeden Blocks der Blockchain-Struktur anhand der Verknüpfungsdaten einer vordefinierten Anzahl an Blöcken der Blockchain-Struktur verifizierbar sind, mit welchen der entsprechende Block bidirektional verkettet ist,
wobei das Datenspeichersystem einen Prozessor und einen elektronischen Speicher mit maschinenlesbaren Instruktionen umfasst, wobei ein Ausführen der maschinenlesbaren Instruktionen durch den Prozessor das Datenspeichersystem dazu veranlasst, ein Verfahren auszuführen, welches umfasst:

- Bereitstellen der bidirektional verketteten Blockchain-Struktur,
- Bereitstellen der zu speichernden Daten,
- Erstellen eines zusätzlichen Blocks $B_i$ zum Erweitern der Blockchain-Struktur, welcher die zu speichernden Daten als Nutzdaten umfasst,
- Erstellen einer bidirektionalen Verkettung des zusätzlichen Blocks $B_i$ mit einer vordefinierten Anzahl an vorangehenden Blöcken, welche dem zusätzlichen Block in der Blockchain-Struktur vorangehen,

wobei das Erstellen der bidirektionalen Verkettung ein Ausführen einer Rückwärtsverknüpfung des zusätzlichen Blocks mit der vordefinierten Anzahl an vorangehenden Blöcken und ein Ausführen einer Vorwärtsverknüpfung der vordefinierten Anzahl an vorangehenden Blöcken mit dem zusätzlichen Block umfasst, wobei die Rückwärtsverknüpfung umfasst:

> o Berechnen eines Prüfwerts der zu speichernden Daten,
> o Extrahieren einer Anzahl an ersten Gruppen mit Prüfwertabschnitten aus dem Prüfwert der zu speichernden Daten, wobei die Anzahl an ersten Gruppen der vordefinierten Anzahl an vorangehenden Blöcken entspricht,
> o Verteiltes Speichern der Prüfwertabschnitte jeweils einer der ersten Gruppen in den Verknüpfungsdaten eines der Blöcke der vordefinierten Anzahl an vorangehenden Blöcken gemäß einem Verteilungsschema, wobei das Verteilungsschema abhängig von den zu speichernden Daten ist,

wobei die Vorwärtsverknüpfung für jeden einzelnen Block der vordefinierten Anzahl an vorangehenden Blöcken umfasst:

> o Berechnen eines Prüfwerts der Nutzdaten des entsprechenden vorangehenden Blocks,
> o Extrahieren einer zweiten Gruppe mit Prüfwertabschnitten aus dem Prüfwert der Nutzdaten des entsprechenden vorangehenden Blocks,
> o Verteiltes Speichern der Prüfwertabschnitte der zweiten Gruppe in den Verknüpfungsdaten des zusätzlichen Blocks gemäß einem Verteilungsschema, wobei das Verteilungsschema abhängig von den Nutzdaten des entsprechenden vorangehenden Blocks ist.

Nach Ausführungsformen ist das elektronisches Datenspeichersystem dazu konfiguriert eine oder mehrere der zuvor genannten Ausführungsformen des Verfahrens zum manipulationssicheren Speichern von Daten auszuführen.

Nach Ausführungsformen umfasst das elektronisches Datenspeichersystem ein Dateisystem. Das Dateisystem stellt eine Ablageorganisation auf dem Datenspeicher bereit. Daten wie etwa digital codierte Dokumente können als Dateien auf dem Datenspeicher gespeichert werden. Ferner können die Dateien gelesen, verändert oder gelöscht werden.

Nach Ausführungsformen umfasst das elektronische Datenspeichersystem eine Datenbank. Eine Datenbank bzw. ein Datenbanksystem bezeichnet ein System zur elektronischen Datenverwaltung. Ein Datenbanksystem erlaubt es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Das Datenbanksystem umfasst beispielsweise ein Datenbankmanagementsystem und eine Datenbank im engeren Sinn bzw. Datenbasis. Das Datenbankmanagementsystem stellt eine Verwaltungssoftware zum Verwalten von Daten der Datenbasis bereit. Die Verwaltungssoftware organisiert intern die strukturierte Speicherung der Daten und kontrolliert alle lesenden und schreibenden Zugriffe auf die Datenbank. Die Datenbasis umfasst die Menge der zu verwaltenden Daten. Daten wie etwa digital codierte Dokumente werden in diesem Fall beispielsweise als Teil der Datenbasis gespeichert.

Der Speicher kann beispielsweise einen Wechselspeicher umfassen handeln, d.h. einen nicht fest eingebauter, austauschbarer und/oder tragbarer Datenträger für ein Computersystem handeln. Wechselspeicher umfassen beispielsweise Blu-ray Discs, CDs, Disketten, DVDs, HD-DVDs, Magnetbänder, MO/MODs, Solid-State-Drives (SSD), Speicherkarten, USB-Sticks oder Wechselfestplatten.

Ausführungsformen betreffen ein Telekommunikationssystem, welches ein elektronisches Datenspeichersystem nach einer der vorgenannten Ausführungsformen und eine Kommunikationsschnittstelle zum Kommunizieren über ein Netzwerk umfasst, wobei das Bereitstellen der zu speichernden Daten ein Empfangen der Daten mittels einer Kommunikationsschnittstelle über ein Netzwerk umfasst, wobei das ausgeführte Verfahren ferner umfasst:

- Empfangen einer Anfrage nach einer aktuellen Version der Blockchain-Struktur mittels der Kommunikationsschnittstelle über das Netzwerk von einem anfragenden Telekommunikationssystem,
- Versenden der erweiterten Blockchain-Struktur mittels der Kommunikationsschnittstelle über das Netzwerk an das anfragende Telekommunikationssystem in Antwort auf die empfangene Anfrage.

Bei dem Telekommunikationssystem handelt es sich beispielsweise um ein Computersystem, welches zur Kommunikation über ein Netzwerk konfiguriert ist.

Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln. Ferner kann es sich bei dem beispielsweise um ein digitales zellulares Mobilfunknetzwerk handeln.

Unter einem "Computersystem" wird hier ein Gerät verstanden, welches mittels programmierbarer Rechenvorschriften unter Verwendung elektronischer Schaltkreise Daten verarbeitet. Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Ein Computersystem kann eine Schnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Bei einem Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um beispielsweise um eine Smartwatch oder Smartglasses handeln. Zudem kann es sich um ein stationäres Computersystem, wie beispielsweise einen Personal Computer oder einen in einer Client-Server-Umgebung eingebundenen Server handeln. Insbesondere kann es sich um einen Server mit einem Datenbankmanagementsystem, welcher eine Datenbank mit einer Blockchain-Struktur verwaltet.

Unter einem "Speicher" bzw. "Datenspeicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Schnittstelle kann beispielsweise als Funkschnittstelle konfiguriert sein, welche eine Kommunikation über ein digitales zellulares Mobilfunknetzwerk ermöglicht, das nach einem Mobilfunkstandard wie zum Beispiel GSM, UMTS, LTE, CDMA oder einem anderen Standard aufgebaut sein kann

Eine Kommunikation kann im Allgemeinen beispielsweise über ein Netzwerk erfolgen. Unter einem "Netzwerk" wird hier jedes Übertragungsmedium mit einer Anbindung zur Kommunikation verstanden, welche eine Kommunikation zwischen zumindest zwei Computersystemen ermöglicht. Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln.

Im Weiteren werden Ausführungsformen der Erfindung mit Bezugnahme auf die Zeichnungen näher erläutert. Es zeigen:

Figur 1     ein schematisches Blockdiagramm einer Ausführungsformen einer exemplarischen Blockchain-Struktur,

Figur 2     ein schematisches Blockdiagramm einer Ausführungsformen eines exemplarischen Blocks,

Figur 3     ein schematisches Flussdiagramm eines exemplarischen Verfahrens zum Erweitern einer bidirektionalen Blockchain-Struktur,

Figur 4     ein schematisches Blockdiagramm eines exemplarischen Verfahrens zum Erstellen eines Blocks,

Figur 5     ein schematisches Flussdiagramm eines exemplarischen Verfahrens zum Prüfen eines Blocks,

Figur 6     ein schematisches Blockdiagramm einer Ausführungsform eines exemplarischen Datenspeichersystems,

Figur 7   ein schematisches Blockdiagramm einer Ausführungsform eines exemplarischen Telekommunikationssystems.

Elemente der nachfolgenden Ausführungsformen, die einander entsprechen, werden mit denselben Bezugszeichen gekennzeichnet.

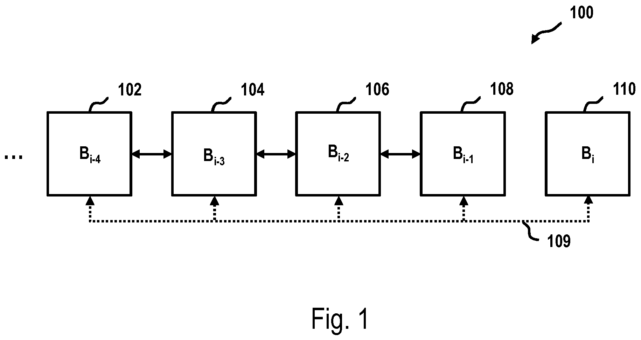

Figur 1 zeigt eine Ausführungsform einer exemplarischen Blockchain-Struktur 100, welche i-1 Blöcke 102, 104, 106, 108 umfasst. Dies Blöcke 102, 104, 106, 108 sind jeweils mit einer vordefinierten Anzahl k an vorangehenden und nachfolgenden Blöcken der Blockchain-Struktur 100 bidirektional verkettet soweit k Blöcke dem jeweiligen Block 102, 104, 106, 108 in der Blockchain-Struktur 100 vorangehen und nachfolgen. Das heißt der Der Block $B_{i-k-n}$, wobei $n \in \mathbb{N}^+$, ist mit den Blöcken $B_{i-(k+1)-n}$ bis $B_{i-2k-n}$ sowie mit den Blöcken $B_{i-(k-1)-n}$ bis $B_{i-(n+1)}$ bidirektional verkettet. Beispielsweise ist k=4. Dann ist der Block $B_{i-1}$ mit den Blöcken $B_{i-2}$ bis $B_{i-5}$ bidirektional verkettet. Der Block $B_{i-2}$ ist mit den Blöcken $B_{i-3}$ bis $B_{i-6}$ sowie mit dem Block $B_{i-1}$ bidirektional verkettet. Der Block $B_{i-3}$ ist mit den Blöcken $B_{i-4}$ bis $B_{i-7}$ sowie mit den Blöcken $B_{i-2}$ bis $B_{i-1}$ bidirektional verkettet. Der Block $B_{i-4}$ ist mit den Blöcken $B_{i-5}$ bis $B_{i-8}$ sowie mit den Blöcken $B_{i-3}$ bis $B_{i-1}$ bidirektional verkettet.

Die Blockchain-Struktur 100 soll um einen zusätzlichen Block 110 erweitert werden. Hierzu müssen bidirektionale Verkettungen 109 zwischen dem zusätzlichen Block $B_i$ 110 und den bestehenden letzten k Blöcken $B_{i-1}$ bis $B_{i-k}$ der Blockchain-Struktur 100, bei k = 4 beispielsweise Blöcke $B_{i-1}$ bis $B_{i-4}$ 102, ..., 108, hergestellt werden.

Hierzu werden Verknüpfungsdaten in den Blöcken $B_{i-1}$ bis $B_{i-4}$ 102, ..., 108 Blockchain-Struktur 100 gespeichert, welche von den Nutzdaten des zusätzlichen Blocks $B_i$ 110 abhängig sind. Umgekehrt werden in dem zusätzlichen Block $B_i$ 110 Verknüpfungsdaten gespeichert, welche jeweils von den Nutzdaten eines der Blöcke $B_{i-1}$ bis $B_{i-4}$ 102, ..., 108 abhängig sind. Somit lassen sich aus den in den Blöcken $B_i$ bis $B_{i-4}$ 102, ..., 110 im Zuge der bidirektionalen Verkettungen gespeicherten Verknüpfungsdaten nur solange korrekte Prüfwert der Nutzdaten der entsprechenden Blöcke $B_i$ bis $B_{i-4}$ 102, ..., 110 rekonstruieren, solange die entsprechenden Nutzdaten unverändert bleiben. Im Falle einer Manipulation, beispielsweise des zusätzlichen Blocks 110, passen die Verknüpfungsdaten der Blöcke $B_{i-1}$ bis $B_{i-4}$ 102, ..., 108 nicht mehr zu den Nutzdaten eines zusätzlichen Blocks 110. Ferner können auch in dem Block $B_i$ 110 selbst Verknüpfungsdaten gespeichert sein, welche von den Nutzdaten des zusätzlichen Blocks $B_i$ 110 abhängig sind. Anhand der Abweichung lässt sich eine entsprechende Manipulation erkennen.

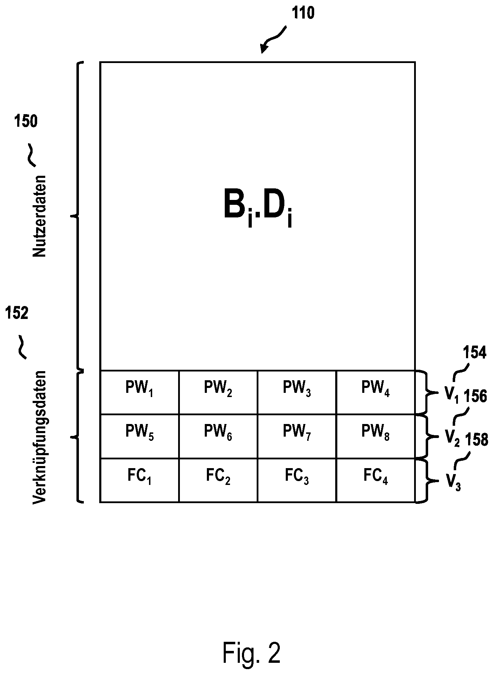

Figur 2 zeigt exemplarisch den Block $B_i$ 110 der Blockchain-Struktur 100 aus Figur 1. Die weiteren Blocks 102, ..., 108 sind analoge strukturiert. Der Block $B_i$ 110 umfasst Nutzdaten $D_i$ 150 und Verknüpfungsdaten 152. Die Verknüpfungsdaten 152 sind in $w \in \mathbb{N}^+$ Abschnitte $V_j$ 154, 156, 158 gegliedert. Im Beispiel gemäß Figur 1 sind es drei Abschnitte: $V_1$ 154, $V_2$ 156, $V_3$ 158.

Dem Block $B_i$ 110 der Blockchain-Struktur 100 ist ein Eigentümer $O(B_i)$ zugeordnet, welcher den Block 110 erstellt, die Nutzdaten 150 hinzufügt sowie die Verknüpfungsdaten 152 initialisiert. Nach Ausführungsformen überschreibt der Eigentümer $O(B_i)$ die Verknüpfungsdaten 152 beim Verknüpfen mit anderen Blöcken abschnitts- bzw. bitweise mit den Prüfwertabschnitten zur Herstellung einer bidirektionalen Verknüpfung. Dafür ist dem Eigentümer $O(B_i)$ ein asymmetrisches kryptographisches Schlüsselpaar $(K_{Pr}, K_{Pr})$ zugeordnet, welches einen privaten kryptographischen Schlüssel $O(B_i).K_{Pr}$ sowie einen öffentlichen kryptographischen Schlüssel $O(B_i).K_{Pr}$ des Eigentümer $O(B_i)$ umfasst.

Der Blockchain-Struktur 100 ist ein Verkettungswert $k \in \mathbb{N}^+$ zugeordnet, welcher beispielsweise vordefiniert ist bzw. initial für die Blockchain-Struktur 100 definiert wird und festlegt, mit wie vielen weiteren Blöcken ein jeder Block in einer Richtung der Blockchain-Struktur bidirektional verkettet ist bzw. verkettet wird. Im Fall von k = 4 ist der Block $B_i$ 110 beispielsweise mit den vier vorangehende und den vier nachfolgenden Blöcken der Blockchain-Struktur 100 verkettet, vorausgesetzt die Blockchain-Struktur 100 umfasst vier dem Block Bi 110 vorangehende und vier dem Block Bi nachfolgende Blöcke. Der Verkettungswert k definiert also auf welche Entfernung der Block $B_i$ mit seinen Nachbarblöcken bidirektional verkettet wird.

Zum Hinzufügen des Blocks $B_i$ 110 in die Blockchain-Struktur 100 müssen Prüfwertabschnitte in den Verknüpfungsdaten der k vorangehende und im Zuge der weiteren Verlängerung der Blockchain-Struktur 100 in den k nachfolgenden Blöcken $B_{i-k}$ bzw. $B_{i+k}$ mittels Rückwärts- bzw. Vorwärtsverknüpfung gespeichert werden. Hierzu müssen nach Ausführungsformen die jeweiligen Eigentümer $O(B_{i-k})$ bzw. $O(B_{i+k})$ der Blöcke $B_{i-k}$ bzw. $B_{i+k}$ ihre Zustimmung geben. Beispielsweise müssen die entsprechenden Prüfwertabschnitte mit dem privaten kryptographischen Schlüssel $O(B_{i-k}).K_{Pr}$ bzw. $O(B_{i+k}).K_{Pr}$ der jeweiligen Eigentümer $O(B_{i-k})$ bzw. $O(B_{i+k})$ verschlüsselt werden. Die Eigentümer der $O(B_{i+k})$ der nachfolgenden Blöcke $B_{i+k}$ müssen ihre jeweilige Zustimmung sukzessive geben, wenn die entsprechenden Blöcke $B_{i+k}$ sukzessive zu der Blockchain-Struktur 110 hinzugefügt werden.

In den Abschnitte 154, 156, 158 der Verknüpfungsdaten 152 sind beispielsweise Prüfwerte $PW_1$, ..., $PW_8$ der Datensätze der Nutzdaten 150 gespeichert sowie Fehlerkorrekturcodes $FC_1$, ..., $FC_4$. Die Nutzdaten 150 werden beispielsweise in acht Datensätze aufgeteilt. Für jeden der Datensätze wird jeweils mittels einer Hashfunktion, z.B. SHA 512, sodass jeder Abschnitt 512 Bits umfasst, ein Prüfwert in Form eines Hashwerts $PW_1$, ..., $PW_8$ berechnet und in den ersten beiden Abschnitten 154, 156 der Verknüpfungsdaten 152 gespeichert. Für die Hashwerts $PW_1$, ..., $PW_8$ wird ferner jeweils paarweise ein Fehlerkorrekturcode mittels eines Fehlerkorrekturverfahrens berechnet, z.B. wird für jedes Bit x=1, ..., 512 $FC_m[x]$=XOR($PW_m[x]$, $PW_{m+4}[x]$). Die resultierenden Fehlerkorrekturcodes $FC_1$, ..., $FC_4$ werden umfassen im dritten Abschnitte 158 der Verknüpfungsdaten 152 gespeichert.

Zum Initialisieren der Blockchain-Struktur 100 werden beispielsweise k Blöcke mit zufälligen Daten erzeugt, d.h. sowohl bei den Nutzdaten als auch bei den initialen Verknüpfungsdaten der k initialen Blöcke handelt es sich um Zufallsdaten. Die k initialen Blöcke werden beispielsweise von einem gemeinsamen Eigentümer erzeugt, welcher die Blockchain-Struktur 100 initialisiert. Nach dem Initialisieren ist die Blockchain-Struktur 100 zur Aufnahme von Nutzdaten bereit durch ein Hinzufügen von zusätzlichen Blöcken mit den entsprechenden Nutzdaten und ein bidirektionales Verketten der zusätzlichen Blöcke mit jeweils k bereits bestehenden Blöcken.

Der zusätzliche Block $B_i$ 110 wird zu der Blockchain-Struktur 100 mit der Länge |BC| = i-1 hinzugefügt. Dabei umfasst das Erweitern der Blockchain-Struktur um den zusätzlichen Block $B_i$ 110 zunächst das Erzeugen des entsprechenden zusätzlichen Blocks $B_i$ 110. Anschließend werden $B_i$ und den letzten k Blöcken $B_{i-1}$, ..., $B_{i-k}$ der Blockchain-Struktur 100 durch das Ausführen einer Rückwärts- und einer Vorwärtsverknüpfung zwischen $B_i$ und den letzten k Blöcken $B_{i-1}$, ..., $B_{i-k}$ bidirektionale miteinander verkettet.

Zum Erzeugen des zusätzlichen Blocks $B_i$ 110 werden die Nutzdaten $D_i$ 150 zu dem zusätzlichen Block $B_i$ 110 hinzugefügt, d.h. $B_i.D_i = D_i$. Die hinzugefügten Nutzdaten $D_i$ 150 werden in b, beispielsweise gleichlange, Datensätze

$\ominus_{x=1, ..., b}^{b}(D_i)$ aufgeteilt, wobei $\ominus_l^r(s)$ den l-ten Datenabschnitt einer Zeichensequenz s bei einer Aufteilung der Zeichensequenz s in r gleichlange Datenabschnitte bzw. Datensätze bezeichnet. Für jeden der b Datensätze wird jeweils ein Hashwert H berechnet:

$$H_{x=1, ..., b} = H\left(\ominus_{x=1, ...,b}^{b}(D_i)\right).$$

Beispielsweise werden die Nutzdaten $D_i$ in 8 gleichlange Abschnitte aufgeteilt und jeweils eine Hashfunktion, wie etwa SHA 512, auf die resultierenden Datensätze angewendet:

$$H_{x=1, ..., 8} = H\left(\ominus_{x=1, ...,8}^{8}(D_i)\right).$$

Die resultierenden Hashwerte werden auf eine gerade Anzahl von Abschnitten bzw. Sequenzen, z.B. zwei Sequenzen154, 156 der Verknüpfungsdaten 152 des Blocks $B_i$ 110 aufgeteilt.

Die Hashwerte der ersten Sequenz 154 von Verknüpfungsdaten 152 und der zweiten Sequenz 156 von Verknüpfungsdaten 152 des Blocks $B_i$ 110 werden bitweise mittels XOR verknüpft:

$$V_3[x] = XOR(V_1[x], V_2[x]),$$

wobei z.B. x = 1, ..., b/n·L, b die Anzahl die Hashwerte pro Sequenz und L die Länge der Hashwerte. Beispielsweise x = 1, ..., 4-512 bei 4 Hashwerte pro Sequenz und einer Hashwertlänge von jeweils 512 Bit. Hieraus resultieren beispielsweise die vier gezeigten Fehlerkorrekturcodes $FC_1$, ..., $FC_4$ des dritten Abschnitts $V_3$ 158 der Verknüpfungsdaten 152 des Blocks $B_i$ 110.

Ist der Block $B_i$ 110b erzeugt, muss dieser bidirektional mit k Blöcken der bestehenden Blockchain-Struktur 100 bidirektional verkettet werden. Hierzu wird eine Rückwärtsverknüpfung und eine Vorwärtsverknüpfung angewandt.

Die Rückwärtsverknüpfung erfolgt, indem für die Nutzdaten $D_i$ des Blocks $B_i$ 110 ein Prüfwert, beispielsweise in Form eines Hashwerts, berechnet in Prüfwertabschnitte aufgeteilt wird. Die Prüfwertabschnitte werden zu Gruppen zusammengefasst, jede Gruppe wird einem der k Blöcke $B_v$ mit v = i-x, wobei x=1, ..., k, zugeordnet und in den Verknüpfungsdaten des entsprechenden Blocks $B_v$ verteilt gespeichert. Hierzu werden für jeden der k Blöcke $B_v$ aus den zu speichernden Daten $D_i$ jeweils Rückwärtsverknüpfungsdaten $Ve^{rw} = E\left(\oslash_x^1\left(H(B_i.D_i)\right), O(B_v).K_{Pr}\right)$ berechnet sowie ein

$$Po^{rw} = E\left(\oslash_x^1\left(H\left(\oplus\left(\ominus_2^2(B_i.D_i),\ominus_1^2(B_i.D_i)\right)\right)\right), O(B_v).K_{Pr}\right).$$

Zur Berechnung der Rückwärtsverknüpfungsdaten Ve$^{rw}$ des Blöcke $B_{v=i-x}$ wird jedes x-te Bit des Hashwerts der Nutzdaten $D_i$ ab einem Offset o = 1 ausgewählt. In dieser beispielsweisen Ausführungsform werden also für den Block $B_{i-1}$ jedes erste Bit, d.h. alle Bits, des Hashwerts ausgewählt, für den Block $B_{i-2}$ jedes zweite Bit, d.h. die Hälfte der Bits, für den Block $B_{i-3}$ jedes dritte Bit, d.h. ein Drittel der Bits , und für den Block $B_{i-4}$ jedes vierte Bit, d.h. ein Viertel der Bits. Die Anzahl der ausgewählten Bits nimmt also mit zunehmendem Abstand des Blocks, für welchen sie zur Speicherung vorgesehen sind, vom Blocks $B_i$ 110 ab. Im vorliegenden Beispiel ist die Anzahl der Bits indirekt proportional zum Abstand. Die ausgewählten Bits werden aneinandergereiht, sodass eine Gruppe von Prüfwertabschnitten bzw. Bits entsteht, und mit dem privaten kryptographischen Schlüssel $K_{Pr}$ des Eigentümers $O(B_v)$ verschlüsselt.

Zur Berechnung des Positionierer Po$^{rw}$ zur Rückwärtsverknüpfung werden die Nutzdaten $D_i$ des zusätzlichen Blocks $B_i$ 110 in eine Mehrzahl von r Datensätze aufgeteilt, z.B. r = 2. Nach Ausführungsformen weisen die r Abschnitte jeweils die gleiche Länge auf. Die Reihenfolge der r Datensätze wird geändert und die Datensätze in der geänderten Reihenfolge konkateniert. Die Konkatenation bezeichnet eine Verknüpfung von einer Mehrzahl von Mengen zu einer neuen Menge. Die verknüpfte Menge besteht dabei aus allen Kombinationen der Elemente beider Mengen unter Verwendung, insbesondere unter Verwendung einer nicht-kommutativen Verknüpfungsoperation. Nach Ausführungsformen werden Zeichensequenzen miteinander konkateniert, d.h. zu neuen Zeichensequenzen aneinandergehängt. Nach Ausführungsformen umfasst jede der konkatenierten Mengen genau ein Element, d.h. eine Zeichensequenz. Für die in geänderter Reihenfolge konkatenierten Datensätze wird ein Prüfwert in Form eines Hashwerts, z.B. mit SHA 512 berechnet.

Jedes x-te Bit des Hashwerts der durchmischten Nutzdaten $D_i$ ab einem Offset o = 1 wird ausgewählt. In dieser beispielsweisen Ausführungsform werden also für den Block $B_{i-1}$ jedes erste Bit, d.h. alle Bits, des Hashwerts ausgewählt, für den Block $B_{i-2}$ jedes zweite Bit, d.h. die Hälfte der Bits, für den Block $B_{i-3}$ jedes dritte Bit, d.h. ein Drittel der Bits , und für den Block $B_{i-4}$ jedes vierte Bit, d.h. ein Viertel der Bits. Die Anzahl der ausgewählten Bits nimmt dabei wiederum mit zunehmendem Abstand von dem zusätzlichen Block $B_i$ 110 ab. Die ausgewählten Bits werden aneinandergereiht, sodass eine Gruppe von Prüfwertabschnitten bzw. Bits entsteht, und mit dem privaten kryptographischen Schlüssel $K_{Pr}$ des Eigentümers $O(B_v)$ verschlüsselt.

Für das weitere Vorgehen wird ein Offset berechnet

$$o = \left(\sum_{j=1,\ldots,x} \frac{|V_1|}{2^j}\right)+1,$$

wobei x = 1, ..., k. Es kann aber auch ein beliebiger anderer x-abhängiger Offset o verwendet werden. Der Offset o wird für die Rückwärtsverknüpfung verwendet, wobei für jeden der k Blöcke $B_v$ die folgenden Verfahrensschritte beginnend mit p = 0, q = 1 ausgeführt werden:

1) q = (((q+Po$^{rw}$[p]+1)%3)+1) im Falle von drei Abschnitten 154, 156, 158 der Verknüpfungsdaten 152,
2) $B_v.V_q$[o+p] = Ve$^{rw}$[p] und
3) p = p+1, falls p ≤ |Ve$^{rw}$|, wobei |Ve$^{rw}$| die Länge der Rückwärtsverknüpfungsdaten Ve$^{rw}$ bezeichnet, wird die Rückwärtsverknüpfung mit Schritt 1) fortgesetzt, ansonsten wird die Ausführung der Rückwärtsverknüpfung für den entsprechenden Block $B_v$ beendet.

Damit zwischen dem zusätzlichen Block $B_i$ 110 und den Blöcken $B_v$ eine bidirektionale Verkettung entstehet, wird zusätzlich eine Vorwärtsverknüpfung ausgeführt. Für jeden der k Blöcke $B_v$ aus den Daten $D_v$ der entsprechenden Blöcke $B_v$ werden jeweils Vorwärtsverknüpfungsdaten $Ve^{vw} = E\left(\oslash_x^1\left(H(B_v.D_v)\right)\right)$ berechnet sowie ein Positionie-

$$Po^{vw} = E\left(\oslash_x^1\left(H\left(\oplus\left(\ominus_2^2(B_v.D_v)\right), H\left(\ominus_1^2(B_v.D_v)\right)\right)\right), O(B_i).K_{Pr}\right)$$

rer Po$^{vw}$ zur                                                                                                               Rückwärtsver-

knüpfung. Ferner wird ein Offset $o = \left(\sum_{j=1,\ldots,x} \frac{|V_1|}{2^{j-1}}\right)+1$, falls x ≥ 2, sonst o = 1 berechnet. Es kann aber auch ein beliebiger anderer x-abhängiger Offset o verwendet werden. Der entsprechende Offset o wird für die Vorwärtsverknüpfung jedes der k Blöcke $B_v$ mit dem zusätzlichen Block $B_i$ 110 verwendet. Die die Vorwärtsverknüpfung umfasst beginnend mit p = 0, q = 1 beispielsweise folgenden Verfahrensschritte:

1)

$$q = \left(\left(\left(q + Po^{vw}[p] + 1\right) \% w\right) + 1\right),$$

2)

$$B_i.V_q[o+p] = Ve^{vw}[p],$$

3) p = p+1, falls p ≤ |Ve$^{vw}$|, wobei |Ve$^{vw}$| die Länge der Vorwärtsverknüpfungsdaten Ve$^{vw}$ bezeichnet, wird das Verfahren mit Schritt 1) fortgesetzt, ansonsten wird die Ausführung der Vorwärtsverknüpfung für den entsprechenden Block $B_v$ beendet.

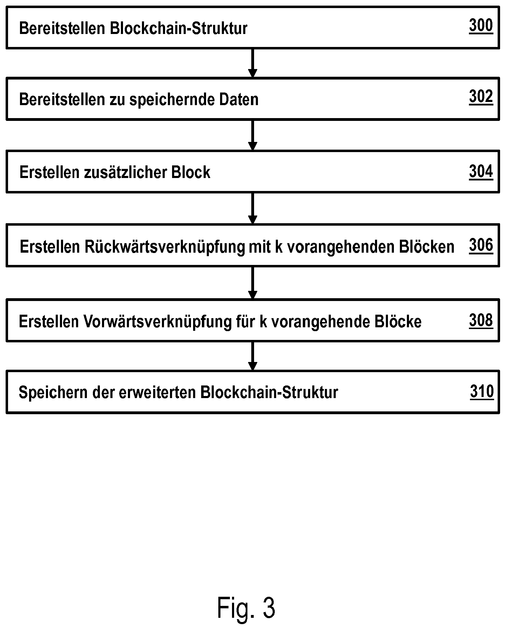

Figur 3 zeigt eine Ausführungsform eines exemplarischen Verfahrens zum Erweitern einer bidirektional verketteten Blockchain-Struktur um einen zusätzlichen Block. In Schritt 300 wird die zu erweiternde Blockchain-Struktur bereitgestellt. In Schritt 302 werden die in dem zusätzlichen Block als Nutzdaten zu speichernden Daten bereitgestellt. In Schritt 304 wird der zusätzliche Block für die Blockchain-Struktur erstellt. Dabei werden die in Schritt 302 bereitgestellten Daten in dem zusätzlichen Block als Nutzdaten gespeichert. Ferner werden Prüfwerte der Nutzdaten als Verknüpfungsdaten in dem zusätzlichen Block gespeichert. Nach Ausführungsformen werden zudem Fehlerkorrekturcodes für die Prüfwerte in den Verknüpfungsdaten gespeichert des zusätzlichen Blocks gespeichert. In Schritt 306 werden Rückwärtsverknüpfungen der Nutzdaten des zusätzlichen Blocks mit jedem der letzten k Blöcke der Blockchain-Struktur erstellt. Die Rückwärtsverknüpfungen erfolgen beispielsweise wie zu Figur 2 erläutert. In Schritt 308 werden Vorwärtsverknüpfungen der Nutzdaten jedes der letzten k Blöcke mit dem zusätzlichen Block erstellt. Die Vorwärtsverknüpfungen erfolgen beispielsweise wie zu Figur 2 erläutert. Die Rück- und Vorwärtsverknüpfungen der Schritte 306 und 308 ergeben k bidirektionale Verknüpfungen des zusätzlichen Blocks mit den letzten k Blöcken der Blockchain-Struktur. In Schritt 310 wird die erweiterte Blockchain-Struktur schließlich gespeichert.

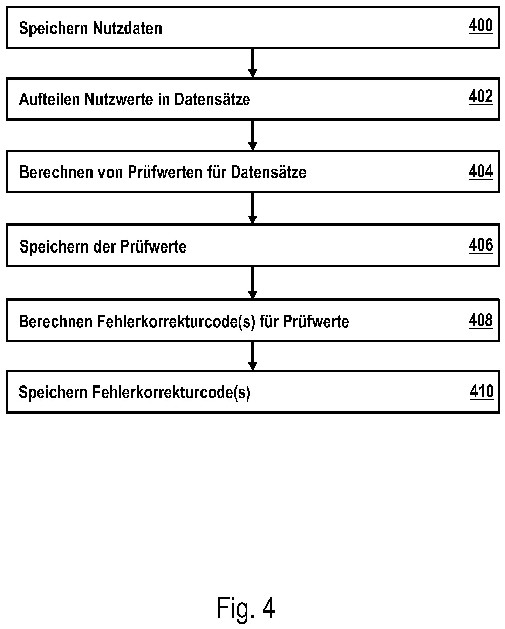

Figur 4 zeigt eine Ausführungsform eines exemplarischen Verfahrens zum Erstellen eines zusätzlichen Blocks für eine bidirektional verkettete Blockchain-Struktur. In Schritt 400 werden die bereitgestellten Nutzdaten in dem zusätzlichen Block gespeichert. In Schritt 402 werden die gespeicherten Nutzdaten in eine Mehrzahl von Datensätze aufgeteilt. In Schritt 404 wird für jeden der Nutzdaten jeweils ein Prüfwert, beispielsweise als Hashwert mittels einer Hashfunktion berechnet. In Schritt 406 werden die Prüfwerte der Nutzdaten, beispielsweise wie zu Figur 2 erläutert, in den Verknüpfungsdaten des zusätzlichen Blocks gespeichert. Nach Ausführungsformen werden die Prüfwerte vor dem Speichern mit einem privaten Schlüssel des Eigentümers des zusätzlichen Blocks verschlüsselt. Nach alternativen Ausführungsformen werden die Prüfwerte unverschlüsselt gespeichert. In Schritt 408 werden Fehlerkorrekturcodes für die gespeicherten Prüfwerte berechnet und in Schritt 410 ebenfalls als Verknüpfungsdaten in dem zusätzlichen Block gespeichert. Beispielsweise werden die Fehlerkorrekturcodes unter Verwendung von bitweisen XOR-Verknüpfungen von Prüfwertpaaren berechnet.

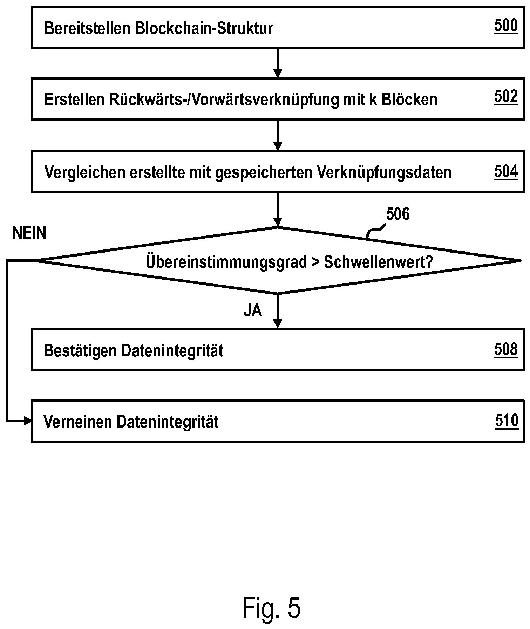

Figur 5 eine Ausführungsform eines exemplarischen Verfahrens zum Prüfen eines Blocks einer bidirektional verketteten Blockchain-Struktur. In Schritt 500 wird die Blockchain-Struktur bereitgestellt. Dabei wird zumindest ein Teil der Blockchain-Struktur bereitgestellt, welcher den zu prüfenden Block sowie die mit dem zu prüfenden Block bidirektional verknüpften weiteren Blöcke. In Schritt 502 werden aus den Nutzdaten des zu prüfenden Blocks die Rückwärtsverknüpfungsdaten und/oder die Vorwärtsverknüpfungsdaten für alle oder einen Teil der vorangehenden und/oder nachfolgenden Blöcke berechnet. Beispielsweise werden alle Rückwärtsverknüpfungsdaten für alle vorangehenden Blöcke oder alle Vorwärtsverknüpfungsdaten für alle nachfolgenden Blöcke berechnet. Nach weiteren Ausführungsformen werden sowohl Rückwärtsverknüpfungsdaten als auch Vorwärtsverknüpfungsdaten berechnet. Nach Ausführungsformen ist festgelegt für welche vorangehenden und/oder nachfolgenden Blöcke Rückwärtsverknüpfungsdaten und/oder Vorwärtsverknüpfungsdaten zu berechnen sind. Nach Ausführungsformen ist festgelegt für wie viele vorangehenden und/oder nachfolgenden Blöcke Rückwärtsverknüpfungsdaten und/oder Vorwärtsverknüpfungsdaten zu berechnen sind. In Schritt 504 werden die berechneten Rückwärtsverknüpfungsdaten und/oder Vorwärtsverknüpfungsdaten mit den entsprechenden in den vorangehenden und/oder nachfolgenden Blöcken als verknüpfungsdaten gespeicherten Rückwärtsverknüpfungsdaten und/oder Vorwärtsverknüpfungsdaten der Nutzdaten des zu prüfenden Blocks verglichen. Dazu wird in Schritt 506 geprüft, ob die miteinander verglichenen Rückwärtsverknüpfungsdaten und/oder Vorwärtsverknüpfungsdaten einen ausreichenden Übereinstimmungsgrad aufweisen, welcher einen vordefinierten Schwellenwert überschreitet. Ist die der Fall, wird in Schritt 508 die Datenintegrität der Nutzdaten des zu prüfenden Blocks bestätigt, beispielsweise durch Erzeugen eines Bestätigungssignals. Ist die der Fall, wird in Schritt 510 die Datenintegrität der Nutzdaten des zu prüfenden Blocks verneint und beispielsweise ein Fehlersignal erzeugt. Zusätzlich oder alternativ werden in Schritt 504 beispielsweise Prüfwerte der Nutzdaten des zu prüfenden Blocks berechnet. Zusätzlich werden unter Verwendung der in den Verknüpfungsdaten des zu prüfenden Blocks gespeicherten Fehlerkorrekturcodes aus den in den Verknüpfungsdaten teilweise gespeicherten Prüfwerten die vollständigen bzw. fehlerkorrigierten Prüfwerte des der Nutzdaten des zu prüfenden Blocks rekonstruiert. In Schritt 504 werden die berechneten Prüfwerte und die aus den gespeicherten Verknüpfungsdaten unter Verwendung der Fehlerkorrekturcodes rekonstruierten Prüfwerten verglichen.

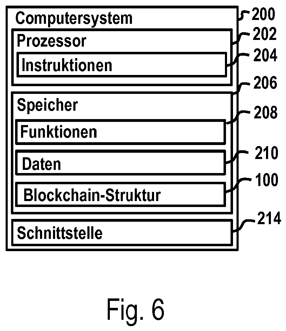

Figur 6 zeigt ein schematisches Blockdiagramm einer Ausführungsform eines exemplarischen Datenspeichersystems 200 in Form eines Computersystems zum manipulationssicheren Speichern von Daten 210 in einem elektronischen Speicher 206 unter Verwendung einer bidirektional verketteten Blockchain-Struktur 100. Das Computersystem 200 umfasst einen Prozessor 202, welcher dazu konfiguriert ist, Programminstruktionen 204 auszuführen. Durch Ausführung der Programminstruktionen 204 steuert der Prozessor 202 das Computersystem 200 so, dass es eine der zuvor beschriebenen Ausführungsformen des Verfahrens zum manipulationssicheren Speichern von Daten ausführt.

Das Computersystem 200 umfasst ferner einen Speicher 206, in welchem Funktionen 208 zum Ausführen von Rückwärts- und/Vorwärtsverknüpfungen zum Erweitern und/oder prüfen der bidirektional verkettete Blockchain-Struktur 100 gespeichert sind. Der Speicher 206 umfasst zudem Daten 210, welche unter Verwendung einer bidirektional verketteten Blockchain-Struktur 100 gegen Manipulationen geschützt bzw. manipulationssicher gespeichert werden sollen. Beispielsweise führt das Computersystem 200 eines der Verfahren gemäß Figuren 3 und 4 aus und erzeugt einen zusätzlichen Block für die Blockchain-Struktur 100, welcher die zu manipulationssicher speichernden Daten 210 umfasst und bidirektional mit dem letzten Block der Blockchain-Struktur 100 verknüpft wird. Für die bidirektionale Verknüpfung des zusätzlichen Blocks werden beispielsweise Rückwärts- und/Vorwärtsverknüpfungen unter Verwendung der Funktionen 208 ausgeführt.

Schließlich umfasst das Computersystem 200 eine Kommunikationsschnittstelle 214. Bei dieser Kommunikationsschnittstelle 214 kann es sich beispielsweise um eine Netzwerkschnittstelle zur Kommunikation über ein Netzwerk oder um eine Schnittelle zur Kommunikation mit einem Wechseldatenträger handeln. Über die Kommunikationsschnittstelle 214 können beispielsweise die Daten 210 und/oder die Blockchain-Struktur 100 bereitgestellt werden. Ferner kann es sich bei der Kommunikationsschnittstelle 214 um eine Nutzerschnittstelle zur Eingabe von Befehlen durch einen Nutzer und/oder zur Ausgabe von Ergebnissen handeln.

Nach Ausführungsformen können die Programminstruktionen 204 beispielsweise ein Datenbankmanagementsystem umfassen, welches in dem Speicher 206 gespeicherte Blockchain-Strukturen, wie etwa Blockchain-Struktur 100, verwaltet.

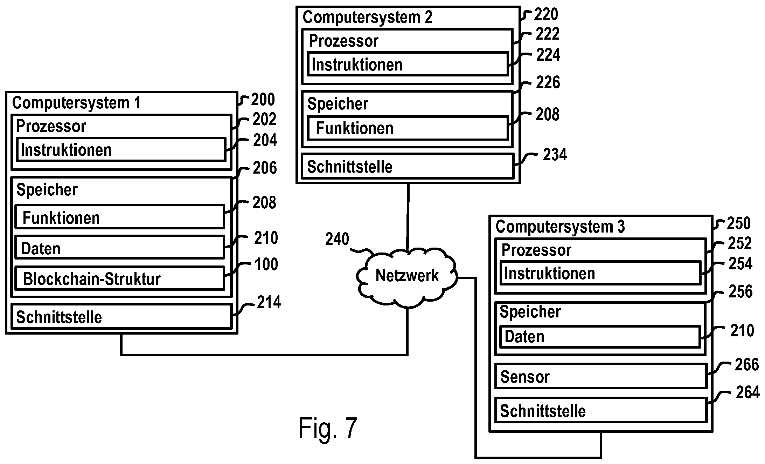

Figur 7 das exemplarische Datenspeichersystems 200 aus Figur 6, welches als ein Telekommunikationssystem konfiguriert ist, das mittels der Kommunikationsschnittstelle 214 über das Netzwerk 240 mit anderen Computersystemen, wie etwa den Computersystemen 220, 250, kommunizieren kann. Beispielsweise werden die Daten 210 von dem Computersystem 250 über das Netzwerk 240 bereitgestellt.

Das Computersystem 250 umfasst beispielsweise einen Speicher 256 zum Speichern der Daten 210, welche durch das Computersystem 200 gegen Manipulationen gesichert werden sollen. Nach Ausführungsformen handelt es sich bei den Daten 210 um Daten, welche kennzeichnend für ein digital codiertes Dokument sind. Beispielsweise handelt es sich bei den Daten 210 um einen Hashwert des Inhalts eines digital codierten Dokuments. Nach weiteren Ausführungsformen handelt es sich bei den Daten 210 um Transaktionsdaten einer von dem Computersystem 250 veranlassten, protokollierten und/oder ausgeführten Transaktion. Nach weiteren Ausführungsformen handelt es bei den Daten 210 um Sensordaten, welche mittels eines Sensors 266 des Computersystems 250 erfasst wurden. Ferner umfasst das Computersystem 250 einen Prozessor 252, welcher dazu konfiguriert ist, Programminstruktionen 254 auszuführen. Nach Ausführungsformen ist das Computersystems 250 ebenfalls als ein Telekommunikationssystem konfiguriert sein, welches mittels der Kommunikationsschnittstelle 264 über das Netzwerk 240 mit dem Computersystemen 200 kommunizieren kann. Ein Ausführen der Programminstruktionen 254 durch den Prozessor 252 veranlasst das Computersystems 250 beispielsweise die Daten 210 an das Computersystem 200 zu senden. Das Übersenden der Daten 210 über das Netzwerk 240 kann dabei beispielsweise in Antwort auf eine Anfrage durch das Computersystem 200 oder auf eigene Initiative durch das Computersystem 250 veranlasst erfolgen.

Die Figur 7 zeigt zudem das Computersystem 220, welche beispielsweise ebenfalls als ein Telekommunikationssystem konfiguriert ist und mittels der Kommunikationsschnittstelle 264 über das Netzwerk 240 mit dem Computersystemen 200 kommunizieren kann. Das Computersystem 220 umfasst beispielsweise einen Prozessor 222 mit Programminstruktionen 224. Der Prozessor 222 ist dazu konfiguriert die Programminstruktionen 224 auszuführen, wobei ein Ausführen der Programminstruktionen 224 durch den Prozessor 222 das Computersystems 220 dazu veranlasst die um die Daten 210 erweiterte Blockchain-Struktur 100 über das Netzwerk von dem Computersystem 200 anzufragen.

In Antwort auf eine entsprechende Anfrage empfängt das Computersystems 220 beispielsweise die Blockchain-Struktur 100. Nach Ausführungsformen kann das Computersystems 220 in der Blockchain-Struktur 100 gespeicherte Daten auslesen. Die Integrität der ausgelesenen Daten kann das Computersystems 220 beispielsweise unter Verwendung der in dem Speicher 226 gespeicherten Funktionen 208 prüfen. Mit den Funktionen 208 können die Rückwärts- und/Vorwärtsverknüpfungen der Blockchain-Struktur 100, welche die Blöcke der Blockchain-Struktur 100 bidirektional miteinander verketten, nachgerechnet und auf Konsistenz bzw. Integrität geprüft werden. Bei den ausgelesenen Daten handelt es sich beispielsweise um Daten zum Belegen der Authentizität eines digital codierten Dokuments. Das entsprechende Dokument wird dem Computersystem 220 beispielsweise von dem Computersystem 250 über das Netzwerk 240 zur Verfügung gestellt. Handelt es sich bei den ausgelesenen Daten beispielsweise um einen Hashwert des Inhalts des Dokuments, so kann anhand dieser Daten die Authentizität des bereitgestellten Dokuments geprüft werden. Beispielswiese wird für das Dokument ein Hashwert durch das Computersystem 220 berechnet. Stimmt der berechnete Hashwert mit den ausgelesenen Daten überein, wird das bereitgestellte Dokument als authentisch anerkannt.

Bezugszeichenliste

| 100 | Blockchain-Struktur |
| 102 | Block |
| 104 | Block |
| 106 | Block |
| 108 | Block |
| 109 | bidirektionale Verknüpfungen |
| 110 | zusätzlicher Block |
| 150 | Nutzdaten |
| 152 | Verknüpfungsdaten |
| 154 | Abschnitt der Verknüpfungsdaten |
| 156 | Abschnitt der Verknüpfungsdaten |
| 158 | Abschnitt der Verknüpfungsdaten |
| 200 | Computersystem |
| 202 | Prozessor |
| 204 | Programminstruktionen |
| 206 | Speicher |
| 208 | Funktionen |
| 210 | Daten |
| 214 | Kommunikationsschnittstelle |
| 220 | Computersystem |
| 222 | Prozessor |
| 224 | Programminstruktionen |
| 226 | Speicher |
| 234 | Kommunikationsschnittstelle |
| 240 | Netzwerk |
| 250 | Computersystem |
| 252 | Prozessor |
| 254 | Programminstruktionen |
| 256 | Speicher |
| 264 | Kommunikationsschnittstelle |
| 266 | Sensor |
| $PW_1, ..., PW_8$ | Prüfwerte |
| $FC_1, ..., FC_4$ | Fehlerkorrekturcodes |

**Patentansprüche**

1. Verfahren zum manipulationssicheren Speichern von Daten (210) in einem elektronischen Speicher (206) unter Verwendung einer bidirektional verketteten Blockchain-Struktur (100),

wobei die Blockchain-Struktur (100) eine Mehrzahl von Blöcken (102, ..., 108) umfasst, welche jeweils Nutzdaten und Verknüpfungsdaten umfassen, wobei die Nutzdaten eines jeden Blocks (102, ..., 108) der Blockchain-Struktur (100) anhand der Verknüpfungsdaten einer vordefinierten Anzahl an Blöcken (102, ..., 108) der Block-chain-Struktur (100) verifizierbar sind, mit welchen der entsprechende Block (102, ..., 108) bidirektional verkettet ist,

wobei das Verfahren umfasst:

- Bereitstellen der bidirektional verketteten Blockchain-Struktur (100),
- Bereitstellen der zu speichernden Daten (210),
- Erstellen eines zusätzlichen Blocks $B_i$ (110) zum Erweitern der Blockchain-Struktur (100), welcher die zu speichernden Daten (210) als Nutzdaten (150) umfasst,
- Erstellen einer bidirektionalen Verkettung (109) des zusätzlichen Blocks $B_i$ (110) mit einer vordefinierten Anzahl an vorangehenden Blöcken, welche dem zusätzlichen Block (110) in der Blockchain-Struktur (100) vorangehen, wobei das Erstellen der bidirektionalen Verkettung (109) ein Ausführen einer Rückwärtsverknüpfung des zusätzlichen Blocks (110) mit der vordefinierten Anzahl an vorangehenden Blöcken und ein Ausführen einer Vorwärtsverknüpfung der vordefinierten Anzahl an vorangehenden Blöcken mit dem zusätzlichen Block (110) umfasst,

wobei die Rückwärtsverknüpfung umfasst:

o Berechnen eines Prüfwerts der zu speichernden Daten (210),
o Extrahieren einer Anzahl an ersten Gruppen mit Prüfwertabschnitten aus dem Prüfwert der zu speichernden Daten (210), wobei die Anzahl an ersten Gruppen der vordefinierten Anzahl an vorangehenden Blöcken entspricht,
o Verteiltes Speichern der Prüfwertabschnitte jeweils einer der ersten Gruppen in den Verknüpfungsdaten eines der Blöcke der vordefinierten Anzahl an vorangehenden Blöcken gemäß einem Verteilungsschema, wobei das Verteilungsschema abhängig von den zu speichernden Daten ist,

wobei die Vorwärtsverknüpfung für jeden einzelnen Block der vordefinierten Anzahl an vorangehenden Blöcken umfasst:

o Berechnen eines Prüfwerts der Nutzdaten des entsprechenden vorangehenden Blocks,
o Extrahieren einer zweiten Gruppe mit Prüfwertabschnitten aus dem Prüfwert der Nutzdaten des entsprechenden vorangehenden Blocks,
o Verteiltes Speichern der Prüfwertabschnitte der zweiten Gruppe in den Verknüpfungsdaten (152) des zusätzlichen Blocks gemäß einem Verteilungsschema, wobei das Verteilungsschema abhängig von den Nutzdaten des entsprechenden vorangehenden Blocks ist.

2. Verfahren nach Anspruch 1, wobei jeder Block (102, ..., 108) der Blockchain-Struktur (100) jeweils mit einer Mehrzahl von vorangehenden und/oder nachfolgenden Blöcken der Blockchain-Struktur (100) bidirektional verkettet ist, wobei zwei bidirektional miteinander verkettete Blöcke jeweils Verknüpfungsdaten umfassen, welche von den Nutzdaten des jeweils anderen Blocks der beiden bidirektional miteinander verkettete Blöcke abhängig sind.

3. Verfahren nach einem der vorangehenden Ansprüche, wobei das Verfahren ferner vor dem Erstellen der bidirektionalen Verkettung (109) umfasst:

- Aufteilen der zu speichernden Daten (210) in eine Mehrzahl von Datensätze,
- Berechnen eines Prüfwerts ($PW_1$, ..., $PWs$) für jeden der Datensätze,
- Speichern der Prüfwerte ($PW_1$, ..., $PWs$) der Datensätze als Verknüpfungsdaten (152) in dem zusätzlichen Block $B_i$ (110),

wobei das Speichern der Prüfwertabschnitte in den Verknüpfungsdaten jeweils ein zumindest teilweises Überschreiben von Abschnitten der bestehenden Verknüpfungsdaten umfasst.

4. Verfahren nach einem der vorangehenden Ansprüche, wobei das Aufteilen der zu speichernden Daten (210) ein Aufteilen der in dem zusätzlichen Block $B_i$ (110) der Blockchain-Struktur (100) zu speichernden Daten (210) $D_i$ in b Datensätze gleicher Länge umfasst und
wobei als Prüfwert ($PW_1$, ..., $PWs$) für jeden der Datensätze ein Hashwert $H_x$ berechnet wird:

$$H_{x=1, ..., b} = H\left(\ominus_{x=1, ...,b}^{b}(D_i)\right),$$

wobei $\ominus_{I}^{r}(s)$ den I-ten Datenabschnitt einer Zeichensequenz s bei einer Aufteilung der Zeichensequenz s in r gleichlange Datenabschnitte und $H\left(\ominus_{I}^{r}(s)\right)$ den Hashwert des I-ten Datenabschnitt bezeichnet.

5. Verfahren nach einem der vorangehenden Ansprüche, wobei das Speichern der Prüfwerte ($PW_1$, ..., PWs) der Datensätze ferner umfasst:

   • Erstellen eines Fehlerkorrekturcodes ($FC_1$, ..., $FC_4$) für die zu speichernden Prüfwerte ($PW_1$, ..., PWs) der Datensätze,
   • Speichern des Fehlerkorrekturcodes ($FC_1$, ..., $FC_4$) als Verknüpfungsdaten (152) in dem zusätzlichen Block $B_i$ (110).

6. Verfahren nach Anspruch 5, wobei die zu speichernden Prüfwerte ($FC_1$, ..., $FC_4$) in zwei Sequenzen $V_1$ (154) und $V_2$ (156) der Verknüpfungsdaten (152) angeordnet werden und der Fehlerkorrekturcode ($FC_1$, ..., $FC_4$) als dritte Sequenz $V_3$ (158) der Verknüpfungsdaten (152) in Form einer bitweisen XOR-Verknüpfung der ersten beiden Sequenzen (154, 156) erstellt wird:

$$V_3[x] = XOR(V_1[x], V_2[x]),$$

wobei x das x-te Bit in der jeweiligen Sequenz (154, 156, 158) bezeichnet.

7. Verfahren nach einem der vorangehenden Ansprüche, wobei jedem Block der Blockchain-Struktur (100) jeweils ein Eigentümer zugeordnet ist, wobei jedem der Eigentümer jeweils ein asymmetrisches kryptographisches Schlüsselpaar zugeordnet ist, welches einen privaten und einen öffentlichen kryptographischen Schlüssel umfasst, wobei die ersten und zweiten Gruppen mit Prüfwertabschnitten jeweils mit dem privaten kryptographischen Schlüssel des Eigentümers verschlüsselt werden, welcher dem Block der Blockchain-Struktur (100) zugeordnet ist, in dessen Verknüpfungsdaten die Prüfwertabschnitte der entsprechenden Gruppe gespeichert werden.

8. Verfahren nach einem der vorangehenden Ansprüche, wobei die ersten und zweiten Gruppen mit Prüfwertabschnitte jeweils bitweise verteilt in den Verknüpfungsdaten der entsprechenden Blöcke der Blockchain-Struktur (100) gespeichert werden.

9. Verfahren nach einem der vorangehenden Ansprüche, wobei die Zahl an Prüfwertabschnitten in den ersten Gruppen jeweils in Abhängigkeit vom Abstand des Blocks (102, ..., 108) der Blockchain-Struktur (100), in dessen Verknüpfungsdaten die Prüfwertabschnitte der entsprechenden Gruppe gespeichert werden, zu dem zusätzlichen Block $B_i$ (100) variiert und wobei die Zahl an Prüfwertabschnitten in den zweiten Gruppen jeweils in Abhängigkeit vom Abstand des Blocks (102, ..., 108) der Blockchain-Struktur (100), aus dessen Nutzdaten die Prüfwertabschnitte der entsprechenden Gruppe berechnet und extrahiert wurden, zum zusätzlichen Block $B_i$ (110) variiert.

10. Verfahren nach Anspruch 9, wobei das Erstellen der bidirektionalen Verkettung (109) des zusätzlichen Blocks $B_i$ (110) eine bidirektionale Verkettung mit k Blöcken $B_v$ (102, ..., 108) der Blockchain-Struktur (100) mit v = i-x und x = 1, ..., k umfasst, welche dem zusätzlichen Block $B_i$ (110) unmittelbar vorausgehen, wobei zur Rückwärtsverknüpfung für jeden der k Blöcke $B_v$ (102, ..., 108) aus den zu speichernden Daten $D_i$ jeweils Rückwärtsverknüpfungsdaten $Ve^{rw}$ berechnet werden mit

$$Ve^{rw} = E\left(\oslash_x^1\left(H(B_i.D_i)\right), O(B_v).K_{Pr}\right),$$

wobei $H(B_i.D_i)$ den Hashwert der Daten $D_i$ des Blocks $B_i$ (110), $\oslash_x^g(s)$ eine Auswahl und Aneinanderreihung jedes x-ten Zeichens aus einer Zeichensequenz s ab dem Offset g, $O(B_v).K_{Pr}$ den privaten kryptographischen Schlüssel

$K_{Pr}$ der Eigentümers $O(B_v)$ des Blocks $B_v$ (102, ..., 108) und $E(m, K)$ eine mit dem kryptographischen Schlüssel K verschlüsselte Zeichensequenz m bezeichnet,

für die Rückwärtsverknüpfungsdaten $Ve^{rw}$ wird ein Positionierer $Po^{rw}$ zur Rückwärtsverknüpfung mit

$$Po^{rw} = E\left( \oslash_x^1 \left( H\left( \oplus \left( \ominus_2^2 (B_i.D_i), \ominus_1^2 (B_i.D_i) \right) \right) \right), O(B_v).K_{Pr} \right)$$

berechnet, welcher ein von den zu speichernden Daten $D_i$ abhängiges Verteilungsschema implementieren, wobei $\oplus(s_1, s_2)$ eine Aneinanderreihung der Zeichensequenzen $s_1$ und $s_2$ bezeichnet,

wobei die Verknüpfungsdaten der k Blöcke $B_v$ (102, ..., 108) jeweils in $w \in N$ Abschnitte aufgeteilt sind und wobei die Rückwärtsverknüpfung für jeden der k Blöcke $B_v$ (102, ..., 108) die folgenden Verfahrensschritte beginnend mit p = 0, q = 1 umfasst:

1)

$$q = \left( \left( \left( q + Po^{rw}[p] + 1 \right) \% w \right) + 1 \right),$$

2)

$$B_v.V_q[o+p] = Ve^{rw}[p] \text{ mit } o = \left( \sum_{j=1, ..., x} \frac{|V_1|}{2^j} \right) + 1,$$

3) p = p+1, falls $p \leq |ve^{rw}|$, wobei $|ve^{rw}|$ die Länge der Rückwärtsverknüpfungsdaten $Ve^{rw}$ bezeichnet, wird die Rückwärtsverknüpfung mit Schritt 1) fortgesetzt, ansonsten wird die Ausführung der Rückwärtsverknüpfung für den entsprechenden Block $B_v$ (102, ..., 108) beendet,

wobei zur Vorwärtsverknüpfung für jeden der k Blöcke $B_v$ (102, ..., 108) aus den Daten $D_v$ des entsprechenden Blocks $B_v$ (102, ..., 108) Vorwärtsverknüpfungsdaten $Ve^{vw}$ berechnet werden mit

$$Ve^{vw} = E\left( \oslash_x^1 \left( H(B_v.D_v) \right), O(B_i).K_{Pr} \right),$$

für die Vorwärtsverknüpfungsdaten $Ve^{vw}$ wird ein Positionierer $Po^{vw}$ zur Rückwärtsverknüpfung mit

$$Po^{vw} = E\left( \oslash_x^1 \left( H\left( \oplus \left( \ominus_2^2 (B_v.D_v) \right), H\left( \ominus_1^2 (B_v.D_v) \right) \right) \right), O(B_i).K_{Pr} \right)$$

berechnet,

wobei die Verknüpfungsdaten des zusätzlichen Blocks $B_i$ (110) in $w \in N$ Abschnitte aufgeteilt sind und wobei die Vorwärtsverknüpfung für jeden der k Blöcke $B_v$ (102, ..., 108) die folgenden Verfahrensschritte beginnend mit p = 0, q = 1 umfasst:

1)

$$q = \left( \left( \left( q + Po^{vw}[p] + 1 \right) \% w \right) + 1 \right),$$

2) $B_i.V_q[o+p] = Ve^{vw}[p]$ mit $o = \left( \sum_{j=1,...,x} \frac{|V_1|}{2^{j-1}} \right) + 1$, falls $x \geq 2$, sonst o = 1,

3) p = p+1, falls $p \leq |Ve^{vw}|$, wobei $|Ve^{vw}|$ die Länge der Vorwärtsverknüpfungsdaten $Ve^{vw}$ bezeichnet, wird das Verfahren mit Schritt 1) fortgesetzt, ansonsten wird die Ausführung der Vorwärtsverknüpfung für den entsprechenden Block $B_v$ (102, ..., 108) beendet.

**11.** Verfahren nach einem der vorangehenden Ansprüche, wobei das Verfahren ferner ein Verifizieren eines Blocks (110) der Blockchain-Struktur (100) umfasst, wobei das Verifizieren umfasst:

- Aufteilen der Nutzdaten (150) des zu verifizierenden Blocks (110) in eine Mehrzahl von Datensätze,
- Berechnen eines Prüfwerts für jeden der Datensätze,
- Vergleichen der berechneten Prüfwerte mit den von den Verknüpfungsdaten (152) des zu verifizierenden Blocks (110) umfassten Prüfwerten ($PW_1$, .., PWs) der Nutzdaten (150) des zu verifizierenden Blocks (110), wobei die von den Verknüpfungsdaten (152) umfassten Prüfwerte ($PW_1$, .., PWs) der Nutzdaten (150) des zu verifizierenden Blocks (110) unter Verwendung des Fehlerkorrekturcodes ($FC_1$, .., $FC_4$) rekonstruiert werden.

**12.** Verfahren nach Anspruch 11, wobei das Verifizieren ferner umfasst:

- Berechnen zumindest eines Teils der unter Verwendung der Nutzdaten (150) des zu verifizierenden Blocks (110) erstellten und in den Verknüpfungsdaten derjenigen weiteren Blöcke (102, ..., 108) der Blockchain-Struktur (100) verteilt gespeicherten Prüfwertabschnitten, welche mit dem zu verifizierenden Block (110) bidirektional verkettet sind,
- Vergleichen der berechneten Prüfwertabschnitte mit den gespeicherten Prüfwertabschnitten, wobei der zu verifizierende Block (100) im Falle einer Übereinstimmung der miteinander verglichenen Prüfwertabschnitte erfolgreich verifiziert ist, und/oder

wobei die Berechnung der Prüfwerte ($PW_1$, ..., PWs) und/oder Prüfwertabschnitte im Zuge des Verifizierens unter Verwendung einer Hashfunktion erfolgt, und/oder
wobei das Berechnen der Prüfwertabschnitte im Zuge des Verifizierens umfasst:

- Verschlüsseln der Prüfwertabschnitte jeweils mit dem privaten kryptographischen Schlüssel des Eigentümers, welcher dem Block der Blockchain-Struktur (100) zugeordnet ist, in dessen Verknüpfungsdaten die entsprechenden Prüfwertabschnitte gespeichert sind.

**13.** Verfahren nach einem der vorangehenden Ansprüche, wobei die zu speichernden Daten (210) Daten umfassen, welche kennzeichnend für den Inhalt eines digital codierten Dokuments sind, wobei das Bereitstellen der zu speichernden Daten (210) ein Empfangen der Daten mittels einer Kommunikationsschnittstelle (214) über ein Netzwerk (240) von einem das digital codierte Dokument erstellenden Computersystem (250) umfasst, wobei das Verfahren ferner umfasst:

- Empfangen einer Anfrage nach einer aktuellen Version der Blockchain-Struktur (100) mittels der Kommunikationsschnittstelle (214) über das Netzwerk (240) von einem anfragenden Computersystem (220),
- Versenden der erweiterten Blockchain-Struktur mittels der Kommunikationsschnittstelle (214) über das Netzwerk (240) an das anfragende Computersystem (220) in Antwort auf die empfangene Anfrage, oder
wobei die zu speichernden Daten (210) Daten einer Transaktion umfassen, wobei das Bereitstellen der zu speichernden Daten (210) ein Empfangen der Daten mittels einer Kommunikationsschnittstelle (214) über ein Netzwerk (240) von einem an der Ausführung der Transaktion beteiligten Computersystem (250) umfasst, wobei das Verfahren ferner umfasst:
- Empfangen einer Anfrage nach einer aktuellen Version der Blockchain-Struktur (100) mittels der Kommunikationsschnittstelle (214) über das Netzwerk (240) von einem anfragenden Computersystem (220),
- Versenden der erweiterten Blockchain-Struktur mittels der Kommunikationsschnittstelle (214) über das Netzwerk (240) an das anfragende Computersystem (220) in Antwort auf die empfangene Anfrage, oder
wobei die zu speichernden Daten (210) Zustandsdaten einer Vorrichtung umfassen, wobei das Bereitstellen der zu speichernden Daten (210) ein Empfangen der Daten mittels einer Kommunikationsschnittstelle (214) über ein Netzwerk (240) von einem die Zustandsdaten mittels eines Sensors (266) erfassenden Computersystem (250) umfasst, wobei das Verfahren ferner umfasst:
- Empfangen einer Anfrage nach einer aktuellen Version der Blockchain-Struktur (100) mittels der Kommunikationsschnittstelle (214) über das Netzwerk (240) von einem anfragenden Computersystem (250),
- Versenden der erweiterten Blockchain-Struktur (130) mittels der Kommunikationsschnittstelle (214) über das Netzwerk (240) an das anfragende Computersystem (250) in Antwort auf die empfangene Anfrage.

**14.** Elektronisches Datenspeichersystem (200) zum manipulationssicheren Speichern von Daten (210) in einer bidirektional verketteten Blockchain-Struktur (100),

wobei die Blockchain-Struktur (100) eine Mehrzahl von Blöcken (102, ..., 108) umfasst, welche jeweils Nutzdaten und Verknüpfungsdaten umfassen, wobei die Nutzdaten eines jeden Blocks (102, ..., 108) der Blockchain-Struktur (100) anhand der Verknüpfungsdaten einer vordefinierten Anzahl an Blöcken der Block-chain-Struktur (100) verifizierbar sind, mit welchen der entsprechende Block (102, ..., 108) bidirektional verkettet ist,

wobei das Datenspeichersystem einen Prozessor (202) und einen elektronischen Speicher (206) mit maschinenlesbaren Instruktionen (204) umfasst, wobei ein Ausführen der maschinenlesbaren Instruktionen (204) durch den Prozessor (202) das Datenspeichersystem (200) dazu veranlasst, ein Verfahren auszuführen, welches umfasst:

- Bereitstellen der bidirektional verketteten Blockchain-Struktur (100),
- Bereitstellen der zu speichernden Daten (210),
- Erstellen eines zusätzlichen Blocks $B_i$ (110) zum Erweitern der Blockchain-Struktur (100), welcher die zu speichernden Daten (210) als Nutzdaten (150) umfasst,
- Erstellen einer bidirektionalen Verkettung (109) des zusätzlichen Blocks $B_i$ (110) mit einer vordefinierten Anzahl an vorangehenden Blöcken, welche dem zusätzlichen Block (110) in der Blockchain-Struktur (100) vorangehen, wobei das Erstellen der bidirektionalen Verkettung (109) ein Ausführen einer Rückwärtsverknüpfung des zusätzlichen Blocks (110) mit der vordefinierten Anzahl an vorangehenden Blöcken und ein Ausführen einer Vorwärtsverknüpfung der vordefinierten Anzahl an vorangehenden Blöcken mit dem zusätzlichen Block (110) umfasst,

wobei die Rückwärtsverknüpfung umfasst:

o Berechnen eines Prüfwerts der zu speichernden Daten (210),
o Extrahieren einer Anzahl an ersten Gruppen mit Prüfwertabschnitten aus dem Prüfwert der zu speichernden Daten (210), wobei die Anzahl an ersten Gruppen der vordefinierten Anzahl an vorangehenden Blöcken entspricht,
o Verteiltes Speichern der Prüfwertabschnitte jeweils einer der ersten Gruppen in den Verknüpfungsdaten eines der Blöcke der vordefinierten Anzahl an vorangehenden Blöcken gemäß einem Verteilungsschema, wobei das Verteilungsschema abhängig von den zu speichernden Daten ist,

wobei die Vorwärtsverknüpfung für jeden einzelnen Block der vordefinierten Anzahl an vorangehenden Blöcken umfasst:

o Berechnen eines Prüfwerts der Nutzdaten des entsprechenden vorangehenden Blocks,
o Extrahieren einer zweiten Gruppe mit Prüfwertabschnitten aus dem Prüfwert der Nutzdaten des entsprechenden vorangehenden Blocks,
o Verteiltes Speichern der Prüfwertabschnitte der zweiten Gruppe in den Verknüpfungsdaten (152) des zusätzlichen Blocks gemäß einem Verteilungsschema, wobei das Verteilungsschema abhängig von den Nutzdaten des entsprechenden vorangehenden Blocks ist.

15. Telekommunikationssystem, welches ein elektronisches Datenspeichersystem (200) nach Anspruch 14 und eine Kommunikationsschnittstelle (214) zum Kommunizieren über ein Netzwerk (240) umfasst, wobei das Bereitstellen der zu speichernden Daten (210) ein Empfangen der Daten mittels einer Kommunikationsschnittstelle (214) über ein Netzwerk (240) umfasst, wobei das ausgeführte Verfahren ferner umfasst:

- Empfangen einer Anfrage nach einer aktuellen Version der Blockchain-Struktur (100) mittels der Kommunikationsschnittstelle (214) über das Netzwerk (240) von einem anfragenden Telekommunikationssystem (220),
- Versenden der erweiterten Blockchain-Struktur mittels der Kommunikationsschnittstelle (214) über das Netzwerk (240) an das anfragende Telekommunikationssystem (220) in Antwort auf die empfangene Anfrage.

## Claims

1. A method for the tamper-proof storing of data (210) in an electronic store (206) using a bidirectionally linked blockchain structure (100),

wherein the blockchain structure (100) comprises a plurality of blocks (102, ..., 108), each comprising payload data and link data, wherein the payload data of each block (102, ..., 108) of the blockchain structure (100) are verifiable by means of the link data of a predefined number of blocks (102, ..., 108) of the blockchain structure (100) to which the corresponding block (102, ..., 108) is bidirectionally linked,
wherein the method comprises the steps of:

- providing the bidirectionally linked blockchain structure (100),
- providing the data (210) to be stored,
- creating an additional block $B_i$ (110) to extend the blockchain structure (100) which comprises the data (210) to be stored as payload data (150),
- creating a bidirectional linking (109) of the additional block $B_i$ (110) to a predefined number of preceding blocks that precede the additional block (110) in the blockchain structure (100), wherein creating the bidirectional linking (109) comprises performing a backward linking of the additional block (110) to the predefined number of preceding blocks and performing a forward linking of the predefined number of preceding blocks to the additional block (110),

wherein the backward linking comprises the steps of:

○ calculating a check value of the data (210) to be stored,
○ extracting a number of first groups with check value portions from the check value of the data (210) to be stored, wherein the number of first groups corresponds to the predefined number of preceding blocks,
○ storing the check value portions of the first groups in distributed form in the link data of each of the blocks of the predefined number of preceding blocks according to a distribution scheme, the distribution scheme being dependent on the data to be stored,

wherein the forward linking for each individual block of the predefined number of preceding blocks comprises the steps of:

○ calculating a check value of the payload data of the corresponding preceding block,
○ extracting a second group with check value portions from the check value of the payload data of the corresponding preceding block,
○ storing the check value portions of the second group in distributed form in the link data (152) of the additional block according to a distribution scheme, the distribution scheme being dependent on the payload data of the corresponding preceding block.

2. The method according to claim 1, wherein each block (102, ..., 108) of the blockchain structure (100) is bidirectionally linked to a plurality of preceding and/or succeeding blocks of the blockchain structure (100), wherein two bidirectionally linked blocks each comprise link data which are dependent on the payload data of the other block of the two bidirectionally linked blocks.

3. The method according to either one of the preceding claims, wherein the method, prior to creating the bidirectional linking (109), further comprises the steps of:

- dividing the data (210) to be stored into a plurality of data records;
- calculating a check value ($PW_1$, ..., PWs) for each of the data records,
- storing the check values ($PW_1$, ..., PWs) of the data records as link data (152) in the additional block $B_i$ (110),

wherein the storing of the check value portions in the link data comprises in each case an at least partial overwriting of portions of the existing link data.

4. The method according to one of the preceding claims, wherein the dividing of the data (210) to be stored comprises a dividing of the data (210) $D_i$ to be stored in the additional block $B_i$ (110) of the blockchain structure (100) into b data records of equal length, and
wherein a hash value $H_x$ is calculated as check value ($PW_1$, ..., PWs) for each of the data records:

$$H_{x=1, \ldots, b} = H\left(\ominus_{x=1, \ldots, b}^{b}(D_i)\right),$$

wherein $\ominus_l^r(s)$ is the I-th data portion of a character sequence s when the character sequence s is divided into r data portions of equal length and $H\left(\ominus_l^r(s)\right)$ denotes the hash value of the I-th data portion.

5. The method according to any one of the preceding claims, wherein the storing of the check values ($PW_1$, ..., PWs) of the data records further comprises the steps of:

   • creating an error correction code ($FC_1$, ..., $FC_4$) for the check values ($PW_1$, ..., PWs) of the data records to be stored,
   • storing the error correction code ($FC_1$, ..., $FC_4$) as link data (152) in the additional block $B_i$ (110).

6. The method according to claim 5, wherein the check values ($FC_1$, ..., $FC_4$) to be stored are arranged in two sequences $V_1$ (154) and $V_2$ (156) of the link data (152) and the error correction code ($FC_1$, ..., $FC_4$) is generated as a third sequence $V_3$ (158) of the link data (152) in the form of a bitwise XOR operation of the first two sequences (154, 156):

$$V_3[x] = XOR(V_1[x], V_2[x]),$$

   wherein x denotes the x-th bit in the particular sequence (154, 156, 158).

7. The method according to any one of the preceding claims, wherein each block of the blockchain structure (100) is assigned an owner, wherein each of the owners is assigned an asymmetric cryptographic key pair comprising a private and a public cryptographic key, wherein the first and second groups with check value portions are each encrypted with the private cryptographic key of the owner assigned to the block of the blockchain structure (100) in whose link data the check value portions of the corresponding group are stored.

8. The method according to any one of the preceding claims, wherein the first and second groups with check value portions are each stored bitwise distributed in the link data of the corresponding blocks of the blockchain structure (100).

9. The method according to any one of the preceding claims, wherein the number of check value portions in the first groups varies in each case depending on the distance of the block (102, ..., 108) of the blockchain structure (100), in whose link data the check value portions of the corresponding group are stored, from the additional block $B_i$ (100), and wherein the number of check value portions in the second groups varies in each case as a function of the distance of the block (102, ..., 108) of the blockchain structure (100), from whose payload data the check value portions of the corresponding group have been calculated and extracted, from the additional block $B_i$ (110).

10. The method according to claim 9, wherein the creation of the bidirectional linking (109) of the additional block $B_i$ (110) comprises a bidirectional linking to k blocks $B_v$ (102, ..., 108) of the blockchain structure (100) with v = i-x and x = 1, ..., k which immediately precede the additional block $B_i$ (110), wherein for backward linking for each of the k blocks $B_v$ (102, ..., 108) backward link data $Ve^{rw}$ are calculated from the data $D_i$ to be stored, with

$$Ve^{rw} = E\left(\oslash_x^1\left(H(B_i.D_i)\right), O(B_v).K_{Pr}\right),$$

   wherein $H(B_i.D_i)$ denotes the hash value of the data $D_i$ of block $B_i$ (110), $\oslash_x^g(s)$ denotes a selection and stringing together of every x-th character from a character sequence s starting at the offset g, $O(B_v).K_{Pr}$ denotes the private cryptographic key $K_{Pr}$ of the owner $O(B_v)$ of the block $B_v$ (102, ..., 108) and E(m, K) denotes a character sequence m encrypted with the cryptographic key K, for the backward link data $Ve^{rw}$ a positioner $Po^{rw}$ for backward linking with

$$Po^{rw} = E\left( \oslash_x^1 \left( H\left( \oplus \left( \ominus_2^2(B_i.D_i), \ominus_1^2(B_i.D_i) \right) \right) \right), O(B_v).K_{Pr} \right)$$

is calculated and implements a distribution scheme dependent on the data $D_i$ to be stored, wherein $\oplus(s_1, s_2)$ denotes a stringing together of the character sequences $s_1$ and $s_2$,

wherein the link data of the k blocks $B_v$ (102, ..., 108) are each stored in $w \in N$ portions, and wherein the backward link for each of the k blocks $B_v$ (102, ..., 108) comprises the following method steps starting with p = 0, q = 1:

1)

$$q = \left( \left( \left( q + Po^{rw}[p] + 1 \right) \% w \right) + 1 \right),$$

2)

$$B_v.V_q[o+p] = Ve^{rw}[p] \quad \text{with} \quad o = \left( \Sigma_{j=1, ..., x} \frac{|V_1|}{2^j} \right) + 1,$$

3) p = p+1, if p ≤ |Ve$^{rw}$|, wherein |Ve$^{rw}$| is the length of the backward link data Ve$^{rw}$, the backward linking is continued with step 1), otherwise the execution of the backward linking for the corresponding block $B_v$ (102, ..., 108) is terminated,

wherein for forward linking for each of the k blocks $B_v$ (102, ..., 108) forward link data Ve$^{vw}$ are calculated from the data $D_v$ of the corresponding block $B_v$ (102, ..., 108) with

$$Ve^{vw} = E\left( \oslash_x^1 \left( H(B_v.D_v) \right), O(B_i).K_{Pr} \right),$$

for the forward link data Ve$^{vw}$ a positioner Po$^{vw}$ for backward linking with

$$Po^{vw} = E\left( \oslash_x^1 \left( H\left( \oplus \left( \ominus_2^2(B_v.D_v) \right), H\left( \ominus_1^2(B_v.D_v) \right) \right) \right), O(B_i).K_{Pr} \right)$$

is calculated,

wherein the link data of the additional block $B_i$ (110) are divided into $w \in N$ portions, and wherein the forward linking for each of the k blocks $B_v$ (102, ..., 108) comprises the following method steps starting with p = 0, q = 1:

1)

$$q = \left( \left( \left( q + Po^{vw}[p] + 1 \right) \% w \right) + 1 \right),$$

2) $B_i.Vq[o+p] = Ve^{vw}[p]$ with $o = \left( \Sigma_{j=1, ..., x} \frac{|V_1|}{2^{j-1}} \right) + 1$, if x ≥ 2, otherwise o = 1,

3) p = p+1, if p ≤ |Ve$^{vw}$|, wherein |Ve$^{vw}$| is the length of the forward link data Ve$^{vw}$, the method is continued with step 1), otherwise the execution of the forward linking for the corresponding block $B_v$ (102, ..., 108) is terminated.

11. The method according to any one of the preceding claims, wherein the method further comprises verifying a block (110) of the blockchain structure (100), wherein the verification comprises the steps of:

• dividing the payload data (150) of the block (110) to be verified into a plurality of data records;
• calculating a check value for each of the data records;

• comparing the calculated check values with the check values (PW$_1$, .., PWs) of the payload data (150) of the block (110) to be verified, which check values are comprised by the link data (152) of the block (110) to be verified, wherein the check values (PW$_1$, .., PW$_8$) of the payload data (150) of the block (110) to be verified, which check values are comprised by the link data (152), are reconstructed using the error correction code (FC$_1$, .., FC$_4$).

12. The method according to claim 11, wherein the verification also comprises the steps of:

• calculating at least a part of the check value portions which are created using the payload data (150) of the block (110) to be verified and are stored in distributed form in the link data of those further blocks (102, ..., 108) of the block-chain structure (100) which are linked bidirectionally to the block (110) to be verified,
• comparing the calculated check value portions with the stored check value portions, wherein the block (100) to be verified is successfully verified in the case of a match of the compared check value portions, and/or

wherein the calculation of the check values (PW$_1$, ..., PWs) and/or check value portions is carried out during the course of the verification using a hash function, and/or
wherein the calculation of check value portions during the course of the verification comprises the step of:

• encrypting the check value portions in each case with the private cryptographic key of the owner assigned to the block of the blockchain structure (100) in whose link data the corresponding check value portions are stored.

13. The method according to any one of the preceding claims, wherein the data (210) to be stored comprise data which are characterising for the content of a digitally coded document, wherein the provision of the data (210) to be stored comprises a receipt of the data by means of a communications interface (214) via a network (240) from a computer system (250) creating the digitally coded document, wherein the method also comprises the steps of:

• receiving a request for a current version of the blockchain structure (100) by means of the communications interface (214) via the network (240) from a requesting computer system (220),
• sending the extended blockchain structure by means of the communications interface (214) via the network (240) to the querying computer system (220) in response to the received query, or

wherein the data (210) to be stored comprise data of a transaction, wherein the provision of the data (210) to be stored comprises a receipt of the data by means of a communications interface (214) via a network (240) from a computer system (250) involved in the execution of the transaction, wherein the method also comprises the steps of:

• receiving a request for a current version of the blockchain structure (100) by means of the communications interface (214) via the network (240) from a requesting computer system (220),
• sending the extended blockchain structure by means of the communications interface (214) via the network (240) to the querying computer system (220) in response to the received query, or

wherein the data (210) to be stored comprise status data of a device, wherein the provision of the data (210) to be stored comprises a receipt of the data by means of a communications interface (214) via a network (240) from a computer system (250) detecting the status data by means of a sensor (266), wherein the method also comprises the steps of:

• receiving a request for a current version of the blockchain structure (100) by means of the communications interface (214) via the network (240) from a requesting computer system (250),
• sending the extended blockchain structure (130) by means of the communications interface (214) via the network (240) to the requesting computer system (250) in response to the received request.

14. An electronic data storage system (200) for tamper-proof storing of data (210) in a bidirectionally linked blockchain structure (100),

wherein the blockchain structure (100) comprises a plurality of blocks (102, ..., 108), each comprising payload data and link data, wherein the payload data of each block (102, ..., 108) of the blockchain structure (100) are verifiable by means of the link data of a predefined number of blocks of the blockchain structure (100) to which the corresponding block (102, ..., 108) is bidirectionally linked,
wherein the data storage system comprises a processor (202) and an electronic store (206) with machine-readable instructions (204), wherein an execution of the machine-readable instructions (204) by the processor (202) prompts the data storage system (200) to execute a method comprising the steps of:

- providing the bidirectionally linked blockchain structure (100),
- providing the data (210) to be stored,
- creating an additional block $B_i$ (110) to extend the blockchain structure (100) which comprises the data (210) to be stored as payload data (150),
- creating a bidirectional linking (109) of the additional block $B_i$ (110) to a predefined number of preceding blocks that precede the additional block (110) in the blockchain structure (100), wherein creating the bidirectional linking (109) comprises performing a backward linking of the additional block (110) to the predefined number of preceding blocks and performing a forward linking of the predefined number of preceding blocks to the additional block (110),

  wherein the backward linking comprises the steps of:

    ◦ calculating a check value of the data (210) to be stored;
    ◦ extracting a number of first groups with check value portions from the check value of the data (210) to be stored, wherein the number of first groups corresponds to the predefined number of preceding blocks,
    ◦ storing the check value portions of the first groups in distributed form in the link data of each of the blocks of the predefined number of preceding blocks according to a distribution scheme, the distribution scheme being dependent on the data to be stored,

  wherein the forward linking for each individual block of the predefined number of preceding blocks comprises the steps of:

    ◦ calculating a check value of the payload data of the corresponding preceding block,
    ◦ extracting a second group with check value portions from the check value of the payload data of the corresponding preceding block,
    ◦ storing the check value portions of the second group in distributed form in the link data (152) of the additional block according to a distribution scheme, the distribution scheme being dependent on the payload data of the corresponding preceding block.

15. A telecommunications system which comprises an electronic data storage system (200) according to claim 14 and a communications interface (214) for communication via a network (240), wherein the provision of the data (210) to be stored comprises a receipt of the data by means of a communications interface (214) via a network (240), wherein the executed method also comprises the steps of:

- receiving a request for a current version of the blockchain structure (100) by means of the communications interface (214) via the network (240) from a requesting telecommunications system (220),
- sending the extended blockchain structure by means of the communications interface (214) via the network (240) to the requesting telecommunications system (220) in response to the received request.

## Revendications

1. Procédé d'enregistrement de données (210) sécurisé contre les manipulations dans une mémoire électronique (206) moyennant l'emploi d'une structure de chaîne de blocs (100) concaténée de manière bidirectionnelle,

   dans lequel la structure de chaîne de blocs (100) comprend une multiplicité de blocs (102, ..., 108), lesquels comprennent respectivement des données d'utilisation et des données de combinaison, dans lequel les données d'utilisation d'un bloc (102, ..., 108) donné de la structure de chaîne de blocs (100) sont vérifiables à l'aide des données de combinaison d'un nombre prédéfini de blocs (102, ..., 108) de la structure de chaîne de blocs (100) avec lesquelles le bloc (102, ..., 108) correspondant est concaténé de manière bidirectionnelle,
   où le procédé comprend :

   - la préparation de la structure de chaîne de blocs (100) concaténée de manière bidirectionnelle,
   - la préparation des données (210) à enregistrer,

• la création d'un bloc B$_i$ (110) supplémentaire permettant d'élargir la structure de chaîne de blocs (100), lequel comprend les données (210) à enregistrer sous forme de données d'utilisation (150),

• la création d'une concaténation (109) bidirectionnelle du bloc B$_i$ (110) supplémentaire avec un nombre prédéfini de blocs précédents, lesquels précèdent le bloc (110) supplémentaire dans la structure de chaine de blocs (100), où la création de la concaténation (109) bidirectionnelle comprend l'exécution d'une combinaison inverse du bloc (110) supplémentaire avec le nombre prédéfini de blocs précédents et l'exécution d'une combinaison directe du nombre prédéfini de blocs précédents avec le bloc (110) supplémentaire,

dans lequel la combinaison inverse comprend :

◦ le calcul d'une valeur de contrôle des données (210) à enregistrer,
◦ l'extraction d'un nombre de premiers groupes avec des segments de valeurs de contrôle à partir de la valeur de contrôle des données (210) à enregistrer, où le nombre de premiers groupes correspond au nombre prédéfini de blocs précédents,
◦ l'enregistrement partagé des segments de valeurs de contrôle respectivement d'un des premiers groupes dans les données de combinaison d'un des blocs du nombre prédéfini de blocs précédents conformément à un schéma de partage, où le schéma de partage est dépendant des données à enregistrer,

dans lequel la combinaison directe pour chaque bloc individuel du nombre prédéfini de blocs précédents comprend :

◦ le calcul d'une valeur de contrôle des données d'utilisation du bloc précédent correspondant,
◦ l'extraction d'un deuxième groupe avec des segments de valeurs de contrôle à partir des données d'utilisation du bloc précédent correspondant,
◦ l'enregistrement partagé des segments de valeurs de contrôle du deuxième groupe dans les données de combinaison (152) du bloc supplémentaire conformément à un schéma de partage, où le schéma de partage est dépendant des données d'utilisation du bloc précédent correspondant.

2. Procédé selon la revendication 1, dans lequel chaque bloc (102, ..., 108) de la structure de chaîne de blocs (100) est concaténé de manière bidirectionnelle avec une multiplicité de blocs de la structure de chaîne de blocs (100) précédents et/ou postérieurs, dans lequel deux blocs concaténés de manière bidirectionnelle l'un avec l'autre comprennent respectivement des données de combinaison, lesquelles sont dépendantes des données d'utilisation de l'autre bloc respectif parmi les deux blocs concaténés l'un à l'autre de manière bidirectionnelle.

3. Procédé selon l'une des revendications précédentes, où le procédé comprend en outre, avant la création d'une concaténation (109) bidirectionnelle :

• un partage des données (210) à enregistrer en une multiplicité d'ensembles de données,
• le calcul d'une valeur de contrôle (PW$_1$, ..., PWs) pour chacun des ensembles de données,
• l'enregistrement des valeurs de contrôle (PW$_1$, ..., PWs) des ensembles de données sous forme de données de combinaison (152) dans le bloc B$_i$ (110) supplémentaire,

dans lequel l'enregistrement des segments de valeurs de contrôle dans les données de combinaison comprend respectivement au moins une écriture partielle sur des segments de données de combinaison existants.

4. Procédé selon l'une des revendications précédentes, dans lequel le partage des données (210) à enregistrer comprend un partage des données (210) D$_i$ à enregistrer dans le bloc B$_i$ (110) supplémentaire de la structure de chaîne de blocs (100) en b ensembles de données de même longueur, et dans lequel on calcule une valeur de hachage H$_x$ servant de valeur de contrôle (PW$_1$, ..., PWs) pour chacun des ensembles de données :

$$H_{x = 1,..., b} = H(\Theta^b_{x = 1, ..., b}(D_i)),$$

où $\Theta$ l(s) représente le l$^{ème}$ segment de données d'une séquence de caractères s pour un partage de la séquence de caractères s en r segments de données de même longueur et H($\Theta$l(s)) représente la valeur de hachage du l$^{ème}$ segment de données.

**5.** Procédé selon l'une des revendications précédentes, dans lequel l'enregistrement des valeurs de contrôle ($PW_1$, ..., $PW_s$) des ensembles de données comprend en outre :

- la création d'un code de correction d'erreurs ($FC_1$, ..., $FC_4$) pour les valeurs de contrôle ($PW_1$, ..., $PW_s$) des ensembles de données à enregistrer,
- l'enregistrement du code de correction d'erreurs ($FC_1$, ..., $DFC_4$) sous forme de données de combinaison (152) dans le bloc $B_i$ (110) supplémentaire.

**6.** Procédé selon la revendication 5, dans lequel les valeurs de contrôle ($FC_1$, ..., $FC_4$) à enregistrer sont agencées en deux séquences $V_i$(154) et $V_2$ (156) de données de combinaison (152) et le code de correction d'erreurs ($FC_1$, ..., $FC_4$) est créé sous forme d'une troisième séquence $V_3$ (158) de données de combinaison (152) sous forme d'une combinaison XOR par bits des deux premières séquences (154, 156) :

$$V_3[x] = \text{XOR}(V_1[x], V_2[x]),$$

où x représente le $x^{\text{ième}}$ bit de la séquence (154, 156, 158) respective.

**7.** Procédé selon l'une des revendications précédentes, dans lequel un propriétaire est respectivement associé à chaque bloc de la structure de chaînes de blocs (100), où une paire de clés cryptographiques asymétrique est respectivement associée à chaque propriétaire, laquelle comprend une clé cryptographique privée et une clé cryptographique publique, dans lequel les premiers et les deuxièmes groupes sont chiffrés avec des segments de valeurs de contrôle respectivement avec la clé cryptographique privée du propriétaire, lequel est associé au bloc de la structure de chaîne de blocs (100), dans les données de combinaison de laquelle les segments de valeurs de contrôle du groupe correspondant sont enregistrées.

**8.** Procédé selon l'une des revendications précédentes, dans lequel les premiers et deuxièmes groupes avec des segments de valeurs de contrôle sont enregistrés respectivement bit par bit de manière partagée dans les données de combinaison des blocs de la structure de chaîne de blocs (100) correspondants.

**9.** Procédé selon l'une des revendications précédentes, dans lequel le nombre de segments de valeurs de contrôle dans les premiers groupes varie respectivement en fonction de la distance du bloc (102, ..., 108) de la structure de chaîne de blocs (100), dans les données de combinaison de laquelle les segments de valeurs de contrôle du groupe correspondant sont enregistrées, avec le bloc $B_i$ (100) supplémentaire, et dans lequel le nombre de segments de valeurs de contrôle dans les deuxièmes groupes varie respectivement en fonction de la distance du bloc (102, ..., 108) de la structure de chaîne de blocs (100), à partir des données d'utilisation de laquelle les segments de valeurs de contrôle du groupe correspondant ont été calculés et extraits, avec le bloc $B_i$ (110) supplémentaire.

**10.** Procédé selon la revendication 9, dans lequel la création de la concaténation (109) bidirectionnelle du bloc $B_i$ (110) supplémentaire comprend une concaténation bidirectionnelle avec k blocs $B_v$ (102, ..., 108) de la structure de chaîne de blocs (100) avec v = i - x et x = 1, ..., k, lesquels précèdent immédiatement le bloc $B_i$ (110) supplémentaire, dans lequel une combinaison inverse pour chacun des k blocs $B_v$ (102, ..., 108) peut être respectivement calculée respectivement pour des données de combinaison inverse $Ve^{rw}$ avec

$$Ve^{rw} = E(\varnothing^1_x(H(GB_i.D_j), O(B_v), K_{Pr}),$$

où $H(Bi. D_j)$ représente la valeur de hachage des données $D_j$ du bloc $B_i$ (110), $\varnothing^g_x(s)$ représente une sélection et un classement de chacun des $x^{\text{ièmes}}$ caractères d'une séquence de caractères s à partir de l'offset g, $O(B_v).K_{Pr}$ représente la clé cryptographique privée $K_{Pr}$ du propriétaire $O(B_v)$ du bloc $B_v$ (102, ..., 108) et E(m, K) représente une séquence de caractères chiffrée avec la clé cryptographique K, pour les données de combinaison inverse $Ve^{rw}$, un positionneur $Po^{rw}$ pour la combinaison inverse est calculé avec

$$Po^{rw} = E(\varnothing^1_x(H(\oplus(\Theta^2_2(B_i.D_j), \Theta^2_1(B_i.D_j))), O(B_v).K_{Pr})$$

lequel met en œuvre un schéma de partage dépendant des données $D_j$, où $\oplus(s_1, s_2)$ représente un classement des séquences de caractères $s_1$ et $s_2$,

dans lequel les données de combinaison des k blocs $B_v$ (102, ..., 108) sont respectivement partagés en $w \in N$ segments et dans lequel la combinaison inverse pour chacun des k blocs $B_v$ (102, ..., 108) comprend les étapes de procédé commençant avec p = 0, q = 1 :

1)

$$q = (((q + Po^{rw}[p] + 1) \% w) + 1),$$

2)

$$B_v.V_q[o + p] = Ve^{rw}[p] \text{ avec } o = (\Sigma_{j = 1, ..., x} |V_1/2^j|) + 1,$$

3) p = p + 1, dans le cas où $p \leq |Ve^{rw}|$, où $|Ve^{rw}|$ représente la longueur des données de combinaison inverse $Ve^{rw}$, la combinaison inverse est poursuivie avec l'étape 1), sinon l'exécution de la combinaison inverse pour le bloc $B_v$ (102, ..., 108) correspondant est terminée,

dans lequel, pour la combinaison directe, pour chacun des k blocs $B_v$ (102, ..., 108), des données de combinaison directe $Ve^{vw}$ sont calculées à partir des données $D_v$ du bloc $B_v$ (102, ..., 108) correspondant avec

$$Ve^{vw} = E(\varnothing^1_x(H(B_v.D_v)), O(B_j).K_{Pr}),$$

pour les données de combinaison directe $Ve^{vw}$ on calcule un positionneur $Po^{vw}$ pour la combinaison inverse avec

$$Po^{vw} = E(\varnothing^1_x(H(\oplus(\Theta^2_2(B_v.D_v)), H(\Theta^2_1(B_v.D_v)))), O =(B_j).K_{Pr}),$$

dans lequel les données de combinaison du bloc $B_i$ (110) supplémentaire sont partagées dans $w \in N$ segments et dans lequel la combinaison directe pour chacun des k blocs $B_v$ (102, ..., 108) comprend les étapes de procédé suivantes commençant avec p = 0, q = 1 :

1)

$$q = (((q + Po^{vw}[p] + 1) \% w) + 1),$$

2) $B_j.V_q[o + p] = Ve^{vw}[p]$ avec $o = (\Sigma_{j= 1,..., x}|V_1|/2^{j- 1}) + 1$, dans le cas où $x \geq 2$, sinon o = 1,
3) p = p + 1, dans le cas où $p \leq |Ve^{vw}|$, où $|Ve^{vw}|$ représente la longueur des données de combinaison directe $Ve^{vw}$, le procédé est poursuivi avec l'étape 1), sinon l'exécution de la combinaison directe pour le bloc $B_v$ (102, ..., 108) correspondant est terminée.

11. Procédé selon l'une des revendications précédentes, où le procédé comprend en outre une vérification d'un bloc (110) de la structure de chaîne de blocs (100), où la vérification comprend :

    • le partage des données d'utilisation (150) du bloc (110) à vérifier en une multiplicité d'ensembles de données,
    • le calcul d'une valeur de contrôle pour chacun des ensembles de données,
    • la comparaison des valeurs de contrôle calculées avec les valeurs de contrôle ($PW_1$, ..., $PW_8$) des données d'utilisation (150) du bloc (110) à vérifier comprises par les données de combinaison (152) du bloc (110) à vérifier, où les valeurs de contrôle ($PW_1$, ..., $PW_8$) des données d'utilisation (150) du bloc (110) à vérifier comprises par les données de combinaison (152) sont reconstruites moyennant l'emploi du code de correction d'erreurs ($FC_1$, ..., $FC_4$).

12. Procédé selon la revendication 11, dans lequel la vérification comprend en outre :

• le calcul d'au moins une partie des segments de valeurs de contrôle créés moyennant l'emploi des données d'utilisation (150) du bloc (110) à vérifier et enregistrés partagés dans les données de combinaison des autres blocs (102, ..., 108) en question de la structure en chaine de blocs (100), lesquels sont concaténés de manière bidirectionnelle avec le bloc (110) à vérifier,

• la comparaison des segments de valeurs de contrôle calculés avec les segments des valeurs de contrôle enregistrés, où le bloc (100) à vérifier est vérifié avec succès dans le cas d'une concordance des segments de valeurs de contrôle comparés mutuellement, et/ou

dans lequel le calcul des valeurs de contrôle ($PW_1$, ..., $PW_S$), et/ou des segments de valeurs de contrôle, a lieu dans le cadre de la vérification moyennant l'emploi d'une fonction de hachage, et/ou
dans lequel le calcul des segments de valeurs de contrôle dans le cadre de la vérification comprend :

• le chiffrement des segments de valeurs de contrôle respectivement avec la clé cryptographique privée du propriétaire, lequel est associé au bloc de la structure de chaine de blocs (100), dans les données de combinaison duquel les segments de valeurs de contrôle correspondants sont enregistrés.

13. Procédé selon l'une des revendications précédentes, dans lequel les données (210) à enregistrer comprennent des données, lesquelles sont caractéristiques pour le contenu d'un document codé numériquement, où la préparation des données (210) à enregistrer comprend la réception des données au moyen d'une interface de communication (214) par le biais d'un réseau (240) par un système informatique (250) créant le document codé numériquement, le procédé comprenant en outre :

• la réception d'une demande pour une version actuelle de la structure de chaîne de blocs (100) au moyen de l'interface de communication (214) par le biais du réseau (240) par un système informatique (220) demandeur,
• l'envoi de la structure de chaine de blocs élargie au moyen de l'interface de communication (214) par le biais du réseau (240) au système informatique (220) demandeur en réponse à la demande reçue, ou

dans lequel les données (210) à enregistrer comprennent des données d'une transaction, où la préparation des données (210) à enregistrer comprend la réception des données au moyen d'une interface de communication (214) par le biais d'un réseau (240) par un système informatique (250) impliqué lors de l'exécution de la transaction, où le procédé comprend en outre :

• la réception d'une demande pour une version actuelle de la structure de chaîne de blocs (100) au moyen de l'interface de communication (214) par le biais du réseau (240) par un système informatique (220) demandeur,
• l'envoi de la structure de chaine de blocs élargie au moyen de l'interface de communication (214) par le biais du réseau (240) au système informatique (220) demandeur en réponse à la demande reçue, ou

dans lequel les données (210) à enregistrer comprennent des données d'état d'un dispositif, où la préparation des données (210) à enregistrer comprend la réception des données au moyen d'une interface de communication (214) par le biais d'un réseau (240) par un système informatique (250) détectant les données d'état au moyen d'un capteur (266), le procédé comprenant en outre :

• la réception d'une demande pour une version actuelle de la structure de chaîne de blocs (100) au moyen de l'interface de communication (214) par le biais du réseau (240) par un système informatique (250) demandeur,
• l'envoi de la structure de chaine de blocs élargie (130) au moyen de l'interface de communication(214) par le biais du réseau (240) au système informatique (250) demandeur en réponse à la demande reçue.

14. Système de mémoire de données électronique (200) permettant l'enregistrement de données (210) de manière sécurisée contre les manipulations dans une structure de chaîne de blocs (100) concaténée de manière bidirectionnelle,

dans lequel la structure de chaîne de blocs (100) comprend une multiplicité de blocs (102, ..., 108), lesquels comprennent respectivement des données d'utilisation et des données de combinaison, dans lequel les données d'utilisation d'un bloc (102, ..., 108) donné de la structure de chaîne de blocs (100) sont vérifiables à l'aide des données de combinaison d'un nombre prédéfini de blocs de la structure de chaîne de blocs (100) avec lesquels le bloc (102, ..., 108) correspondant est concaténé de manière bidirectionnelle,
où le système de mémoire de données comprend un processeur (202) et une mémoire électronique (206) avec des instructions (204) lisibles par machine, où l'exécution des instructions (204) lisibles par machine par le processeur (202) fait en sorte que le système de mémoire de données (200) exécute un procédé, lequel comprend :

- la préparation de la structure de chaîne de blocs (100) concaténée de manière bidirectionnelle,
- la préparation des données (210) à enregistrer,
- la création d'un bloc $B_i$ (110) supplémentaire permettant d'élargir la structure de chaîne de blocs (100), lequel comprend les données (210) à enregistrer sous forme de données d'utilisation (150),
- la création d'une concaténation (109) bidirectionnelle du bloc $B_i$ (110) supplémentaire avec un nombre prédéfini de blocs précédents, lesquels précèdent le bloc (110) supplémentaire dans la structure de chaine de blocs (100), où la création de la concaténation (109) bidirectionnelle comprend l'exécution d'une combinaison inverse du bloc (110) supplémentaire avec le nombre prédéfini de blocs précédents et l'exécution d'une combinaison directe du nombre prédéfini de blocs précédents avec le bloc (110) supplémentaire,

dans lequel la combinaison inverse comprend :

◦ le calcul d'une valeur de contrôle des données (210) à enregistrer,
◦ l'extraction d'un nombre de premiers groupes avec des segments de valeurs de contrôle à partir de la valeur de contrôle des données (210) à enregistrer, où le nombre de premiers groupes correspond au nombre prédéfini de blocs précédents,
◦ l'enregistrement partagé des segments de valeurs de contrôle respectivement d'un des premiers groupes dans les données de combinaison d'un des blocs du nombre prédéfini de blocs précédents conformément à un schéma de partage, où le schéma de partage est dépendant des données à enregistrer,

dans lequel la combinaison directe pour chaque bloc individuel du nombre prédéfini de blocs précédents comprend :

◦ le calcul d'une valeur de contrôle des données d'utilisation du bloc précédent correspondant,
◦ l'extraction d'un deuxième groupe avec des segments de valeurs de contrôle à partir des données d'utilisation du bloc précédent correspondant,
◦ l'enregistrement partagé des segments de valeurs de contrôle du deuxième groupe dans les données de combinaison (152) du bloc supplémentaire conformément à un schéma de partage, où le schéma de partage est dépendant des données d'utilisation du bloc précédent correspondant.

15. Système de télécommunication, lequel comprend un système de mémoire de données électronique (200) selon la revendication 14 et une interface de communication (214) permettant la communication par le biais d'un réseau (240), où la préparation des données (210) à enregistrer comprend la réception des données au moyen d'une interface de communication (214) par le biais d'un réseau (240), le procédé exécuté comprenant en outre :

- la réception d'une demande pour une version actuelle de la structure de chaîne de blocs (100) au moyen de l'interface de communication (214) par le biais du réseau (240) par un système de télécommunication (220) demandeur,
- l'envoi de la structure de chaine de blocs élargie au moyen de l'interface de communication(214) par le biais du réseau (240) au système de télécommunication (220) demandeur en réponse à la demande reçue.

Fig. 1

110

150

Nutzerdaten

$B_i.D_i$

152

Verknüpfungsdaten

| PW$_1$ | PW$_2$ | PW$_3$ | PW$_4$ |
|--------|--------|--------|--------|
| PW$_5$ | PW$_6$ | PW$_7$ | PW$_8$ |
| FC$_1$ | FC$_2$ | FC$_3$ | FC$_4$ |

154

$V_1$ 156

$V_2$ 158

$V_3$

Fig. 2

| | |
|---|---|
| Bereitstellen Blockchain-Struktur | 300 |

↓

| | |
|---|---|
| Bereitstellen zu speichernde Daten | 302 |

↓

| | |
|---|---|
| Erstellen zusätzlicher Block | 304 |

↓

| | |
|---|---|
| Erstellen Rückwärtsverknüpfung mit k vorangehenden Blöcken | 306 |

↓

| | |
|---|---|
| Erstellen Vorwärtsverknüpfung für k vorangehende Blöcke | 308 |

↓

| | |
|---|---|
| Speichern der erweiterten Blockchain-Struktur | 310 |

## Fig. 3

| Speichern Nutzdaten | 400 |

| Aufteilen Nutzwerte in Datensätze | 402 |

| Berechnen von Prüfwerten für Datensätze | 404 |

| Speichern der Prüfwerte | 406 |

| Berechnen Fehlerkorrekturcode(s) für Prüfwerte | 408 |

| Speichern Fehlerkorrekturcode(s) | 410 |

Fig. 4

| | |
|---|---|
| Bereitstellen Blockchain-Struktur | 500 |

↓

| | |
|---|---|
| Erstellen Rückwärts-/Vorwärtsverknüpfung mit k Blöcken | 502 |

↓

| | |
|---|---|
| Vergleichen erstellte mit gespeicherten Verknüpfungsdaten | 504 |

↓

506

NEIN

Übereinstimmungsgrad > Schwellenwert?

JA ↓

| | |
|---|---|
| Bestätigen Datenintegrität | 508 |

| | |
|---|---|
| Verneinen Datenintegrität | 510 |

# Fig. 5

| Computersystem | 200 |
| Prozessor | 202 |
| Instruktionen | 204 |
| | 206 |
| Speicher | 208 |
| Funktionen | |
| Daten | 210 |
| Blockchain-Struktur | 100 |
| Schnittstelle | 214 |

Fig. 6

Computersystem 2 — 220
Prozessor — 222
Instruktionen — 224
— 226
Speicher — 208
Funktionen
Schnittstelle — 234

Computersystem 1 — 200
Prozessor — 202
Instruktionen — 204
— 206
Speicher
Funktionen — 208
Daten — 210
Blockchain-Struktur — 100
Schnittstelle — 214

240
Netzwerk

Computersystem 3 — 250
Prozessor — 252
Instruktionen — 254
— 256
Speicher
Daten — 210
Sensor — 266
Schnittstelle — 264

Fig. 7

42

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Bitcoin and Cryptocurrency Technologies. **ARVIND NARAYANAN et al.** Entwurf. 09. Februar 2016
- Mastering Bitcoin. The Blockchain. 161